# EUROPEAN PATENT SPECIFICATION

(11) **EP 1 902 540 B1**
(45) Date of publication and mention of the grant of the patent: **22.12.2010**
(21) Application number: 05782937.6
(22) Date of filing: 06.09.2005
(51) Int. Cl.: H04L 9/08

(54) **METHOD AND APPARATUS FOR ESTABLISHING A COMMUNICATION KEY BETWEEN A FIRST COMMUNICATION PARTNER AND A SECOND COMMUNICATION PARTNER USING A THIRD PARTY**
VERFAHREN UND VORRICHTUNG ZUR ERMITTLUNG EINES KOMMUNIKATIONSSCHLÜSSELS ZWISCHEN EINEM ERSTEN KOMMUNIKATIONSPARTNER UND EINEM ZWEITEN KOMMUNIKATIONSPARTNER UNTER BENUTZUNG EINER DRITTEN PARTEI
PROCEDE ET APPAREIL POUR ETABLIR UNE CLE DE COMMUNICATION ENTRE UN PREMIER PARTENAIRE DE COMMUNICATION ET UN DEUXIEME PARTENAIRE DE COMMUNICATION EN UTILISANT UNE TIERCE PARTIE

(43) Date of publication of application: 26.03.2008
(73) Proprietor: NERO AG, 76307 Karlsbad (DE)
(72) Inventor: ECKLEDER, Andreas, 76316 Malsch (DE)
(74) Representative: Schoppe, Fritz
(86) International application number: PCT/EP2005/009561
(87) International publication number: WO 2007/028406

(56) References cited:
- EP-A- 0 281 224
- MENEZES A J; OORSCHOT VAN P C; VANSTONE S A: "Handbook of Applied Cryptography, pages 385-388, 489-493, 515-520, 546-547, 553-559, 578-580" 1997, CRC PRESS SERIES ON DISCRETE MATHEMATICES AND ITS APPLICATIONS , BOCA RATON, FL, CRC PRESS, US , XP002377968 page 385, line 1 - page 388, line 26 page 489, line 1 - page 493, last line ; table 12.1 page 515, line 12 - page 520, line 30 page 546, line 14 - page 547, line 16; figure 13.1 page 553, line 32 - page 554, line 16 page 556, line 34 - page 558, line 18; figures 13.5,13.6 page 578, line 34 - page 580, line 28; figure 13.10

## Description

### Field of the Invention

The present invention relates to the field of cryptography and, particularly, to secured transmissions of cryptography secrets for encrypting/decrypting or assigning and verifying within the context of digital signatures.

### Background of the Invention and Prior Art

Within modern desktop computers, one can find several peripheral devices, such as a DVD recorder, a CD recorder or any other device recording data onto a storage medium. Even an input/output interface writing a data stream, which is transmitted via a transmission channel to a remote receiver, can be regarded as a peripheral device. The only difference between a peripheral device, which writes to a storage medium, is that the storage medium is remotely located while, in the case of a DVD recorder, the storage medium is close to the peripheral device or the device or application controller.

Generally, an application controller, which can be software running on a CPU of a computer, is used for controlling the peripheral device, which is, for example, the DVD recorder. Legally produced DVDs normally have an encrypted content. Normally, encryption is performed by scrambling, using a certain scrambling key, which is also recorded on the DVD. Such DVDs are pressed in a DVD factory and can be sold as legally produced and authentic DVDs. This means that the fact that the DVD has been pressed rather than written by a DVD burner or a DVD recorder on a re-writeable DVD is one (of possibly several) proofs of authenticity.

On the other hand, it would be useful to not only produce authentic DVDs via pressing within typically large DVD factories, which require a high volume for obtaining a reasonable price per DVD, but it would be highly useful to be able to produce authentic DVDs via a regular DVD burner, so that authentic DVDs can also be produced with lower volumes, while a reasonable price is maintained. On the other hand, DVD players, which can be bought as stand-alone devices, require authenticated DVDs, which are scrambled and have the scrambling keys and also have additional security features, which are included in pressed DVDs, but which are not necessarily included in DVDs produced by a DVD recorder included in a computer system. Thus, the problem arises that a user buys a movie at a Web shop and pays for the movie, so that the user has legally bought a film. The user, however, is not only willing to view the film at his computer screen, which might be located in his home office. The user might also be interested in viewing the legally bought movie on his television set, which is positioned in her or his living room, where a regular DVD player is connected to her or his television set. If the user simply copies the movie residing on his hard disc drive in the computer to a DVD using a regular DVD recorder, the DVD player would reject this home-produced DVD, which is, of course, non-desirable for the user and, therefore, a problem for the further growth of Web-based media shops.

On the other hand, distributing DVD recorders or software controlling DVD recorders to each computer, which results in home-produced DVDs, which are not discernable from legally produced DVDs, which originate from a DVD pressing factory, would enhance media piracy and is, therefore, also not useful to be accepted by the user on the one hand and by the media providers or copyright owners on the other hand.

Generally, the problem is how to store and distribute data, particularly DRM protected data (digital rights management protected data) and how to communicate with a computer device storing or having access to the DRM protected data for writing or reading such home-produced and legally accepted DVDs.

In order to guarantee copyrights and to avoid or prohibit illegal copies of digital media content, the industry has established so-called digital rights management systems. When DRM protected data is transferred to a mass storage device, such as an optical disc drive or other peripheral devices, it is desired that handling such data is possible only to authorized components. An authorized component is a component that has been built in compliance with licensing terms and agreements governing the technology it uses. Authorization may be withdrawn after a device is found to violate the licensing terms of said technology. Therefore, a hacked device is considered as unauthorized.

An increasing level of hacker attacks makes fast reaction to attacks a key feature. It is, therefore, desired that unauthorized devices cannot exchange DRM protected data anymore. Menezes A, Van Oorschot, Vanstone, "Handbook of Applied Cryptography, pages 385-388, 489-493, 515-520, 546-547, 553-559, 578-580, 1997, CRC Press Series on Discrete Mathematics and its Applications, Boca Raton, FL, CRC Press, discloses information on identification and entity of application, information on key establishment protocols, authentication trees, binary trees and lifetime protection requirements, and key management life cycles.

It is the object of the present invention to provide a secure communication concept.

This object is achieved by a method of establishing a communication key in accordance with claim 1, a method of operating a first communication partner in accordance with claim 2, a method of operating a second communication partner in accordance with claim 4, a method of operating a third party in accordance with claim 5, an apparatus for establishing a communication key in accordance with claim 21, an apparatus for operating a first communication partner in accordance with claim 22, an apparatus for operating a second communication partner in accordance with claim 23, an apparatus for operating a third party in accordance with claim 24 or a computer program in accordance with claim 25.

The present invention is based on the finding that in contrast to known cryptographic processes in which two communication partners negotiate their session keys, so that two communication partners can securely communicate to each other, a third party or authorization server is used in the present invention which, based on an identification from the first communication partner, establishes the communication key to be used among the communication partners. This establishing takes place using a secure transmission, so that the second communication partner cannot understand this communication. When the communication key is established between the third party, which is the authorization server, and the first communication partner, which can be a DVD recorder, the third party and the second communication partner then start a preferably cryptographically secured transmission to negotiate a cryptographic key. The third party then encrypts the communication key previously agreed upon with the first communication partner using the key, which has been negotiated with the second communication partner and transmits the encrypted key to the second communication partner. The second communication partner then receives the encrypted communication key and decrypts the encrypted communication key using the secret agreed upon with the third party. Both communication partners now have the same secret communication key, which they can use for exchanging encrypted data. However, for exchanging these keys, the two communication partners have not spoken to each other, but performed communication with the central authorization server or third party. The third party, however, does not participate in the data communication between the first and the second communication partners.

The present invention is advantageous in that it provides the possibility to deactivate a useful communication of a device which, in the beginning, was a device fulfilling license terms and which, later on, has been recognized as a hacked device, which does not anymore fulfill any license terms.

The third party has several possibilities for finding out and deactivating devices. Since all communications are channeled via the third party and since the first communication party, which might, for example, be the DVD recorder, has to give its ID to the third party, the third party can explicitly or implicitly reject the first communication partner when it has become known that this communication partner has been hacked. The same is true for the second communication partner. Since the third party only transmits the encrypted communication key to the second communication partner after having received the identification of the second communication partner, the third party has the possibility to reject any further communication with the second communication partner, which is the application controller of the computer software controlling, for example, the DVD recorder when it has become known that the computer software has been hacked.

Preferably, the third party also has to authenticate itself to the first and the second communication partners so that the first and second communication partners can also reject the authorization server when it has become known to the first and second communication partners that the third party, i.e. the authorization server has been hacked.

Since, however, the software-based application controller and the DVD recorder are in a computer system at an individual, it is more likely that the communication partners become hacked than the third party, since the third party is preferably located in a secure environment governed by the entity operating this communication protocol.

Several possibilities exist for rejecting deactivated first and second communication partners. One possibility is to provide something like a "hacker table" in the authorization server in which identification numbers from devices known to be hacked are stored. Preferably, however, binary trees are used for implicitly effecting the communication between the first communication partner and the third party and/or between the second communication partner and the third party. Based on a binary tree located at the third party and based on an expected reaction of an authenticated device, the communication sequence between each communication partner and the third party can be terminated when an identification number received from a communication partner at the third party does not result in an expected outcome at the third party. Alternatively, even when an identification number of a hacked device results in an expected outcome, the binary tree located at the third party can be amended so that a communication partner and the authorization server calculate different keys for communication so that no useful communication between those instances is possible. In response to a binary tree modification at the server in response to knowledge that a device has been hacked, the device cannot generate the same communication key to communicate with the third party, but the communication partner in question generates a wrong communication key, which, again, results in the fact that the communication partner cannot conduct a useful communication with the third party so that the communication partner does not have a chance to obtain the communication key from the authorization server or to establish the communication key with the authorization server.

Preferably, the third party has stored in it a dedicated binary tree for a communication partner. The binary tree includes a root key KR and at least a single leaf key for the communication partner. The communication partner does not have this binary tree and, therefore, does not have the root key. However, the communication partner has stored on it (during an initialization phase) a node key, which is obtained by encrypting the leaf key (only known to the third party and transmitted from the third party to the communication partner) in order to obtain the root key, which is only known to the third party, but which is not known to the communication partner.

Preferably, the third party includes a binary tree for each communication partner, such as two binary trees, wherein the trees are at least different with respect to the root key or the leaf key or the general structure of the tree, i.e. at which level and which branch there are leaves or branches leading to internal nodes rather than leaves.

A preferred embodiment of the present invention comprises the steps of: exchanging a number of data packets understandable only to their respective authorized receivers between a peripheral device and a central authority, at the end of which both central authority and peripheral device share a common secret, for example, a cryptographic key; exchanging a number of data packets understandable only to their respective authorized receivers between a computer device and a central authority, at the end of which both central authority and computer device share another common secret, for example, a cryptographic key; encrypting the shared secret between central authority and peripheral device with the cryptographic key shared between central authority and computer device; transferring the encrypted shared secret to the computer device such that central authority, computer device and peripheral device each share the same secret; the shared secret is then used to encrypt the communication between the peripheral device and the computer device.

In other words, the computer device and the peripheral device can communicate only if both are sharing an identical cryptographic secret. Due to the inventive approach of establishing the secret, the secret can be obtained only if the central authority conveys the secret to both devices. The central authority conveys the secret only to such devices that have been found to be authorized. This is ensured by exchanging data packets between the device and the central authority that can be understood only by authorized devices.

In a preferred embodiment, a so-called authentication server has the possibility to revoke both computer device and peripheral device based on a 40 bit ID assigned to each revision of the communication software running on a computer device and to each peripheral device.

This means that each device, identified through the 40 bit unique identifier, can become unauthorized by registering the 40 bit unique identifier as unauthorized.

In a preferred embodiment, the central authority will work only if it is known to both devices to be authorized, i.e., it can read the packets sent by those devices.

In other words, if a central authority is not authorized, it will not understand the packets sent by the peripheral device and computer device and cannot be used to obtain the shared secret. The central authority must understand both the packets sent by the peripheral device and the computer device to be able to provide the shared secret.

In a preferred embodiment, the peripheral device communicates with the central authority through a proxy, incorporated in a computer device. A proxy is a machine that will forward packets of data as used for creating the shared secret between two devices.

In a preferred embodiment, communication between the computer device and the peripheral device is done using MMC-5 commands, which are known in the art, being SEND KEY and REPORT KEY commands with a new key class. Furthermore, for communication between computer device and central authority, TCP-IP and HTTP/1.1 (RFC 2616) and a combination of GET and POST requests are used. A session ID hereby guarantees that multiple connections to the central authority may exist at a time.

In a further preferred embodiment, the bus key negotiation is based on symmetric encryption using AES-128, a strong cryptography algorithm known in the art as well as on binary trees used as a broadcast encryption mechanism, as is described in C.K. Wong, M. Gouda, S.S. Lam, Secure Group Communications Using Key Graphs, Technical Report TR 97-23, The University of Texas at Austin, July 1997 and in D.M. Wallner, E.J. Harder and R.C. Agee, Key Management of Multicast: Issues and Architectures, Requests for Comments 2627, June 1999 that is known in the art.

### Brief Description of the Drawings

Preferred embodiments of the invention are subsequently discussed with respect to the figures, in which:
- Fig. 1a: is a general set-up of the inventive device;
- Fig. 1b: is a schematic representation of the information at the third party and the first and second communication partners for the binary tree embodiment;
- Fig. 2: is a flow chart of a preferred embodiment of the present invention;
- Fig. 3a: shows steps performed in the third party for initiating a communication key establishment;
- Fig. 3b: shows steps performed at the first communication partner when Fig. 3a has been completed;
- Fig. 3c: shows steps performed in the third party when Fig. 3b has been completed;
- Fig. 3d: shows steps performed in the first communication partner when Fig. 3b has been completed;
- Fig. 4: is a flow chart for illustrating how the third party forwards the communication key to the second communication partner;
- Fig. 5: shows an inventive method of communicating between a first and a second communication partner exemplarily illustrated for DVD controller software and a DVD recorder;
- Fig. 6: is a flow chart of steps to be taken at a third party when knowledge that the first and/or the second communication partners have been hacked is received at the third party;
- Fig. 7: is an example of an authentication tree before and after modification;
- Fig. 8: is a flow chart of a preferred embodiment of third party and communication partner initialization;
- Fig. 9: is a preferred embodiment of the inventive method of establishing a communication key between the DVD recorder as first communication partner, the recording software as the second communication partner and the authorization server as the third party;
- Fig. 10a: is a preferred embodiment of the steps performed between the server and the recorder in Fig. 9;
- Fig. 10b: is a preferred embodiment of the steps performed in the communication between the server and the software, and
- Fig. 10c: is a preferred embodiment of the steps to be taken between the server and the software for transmitting the communication key to the software.

### Detailed Description of Preferred Embodiments

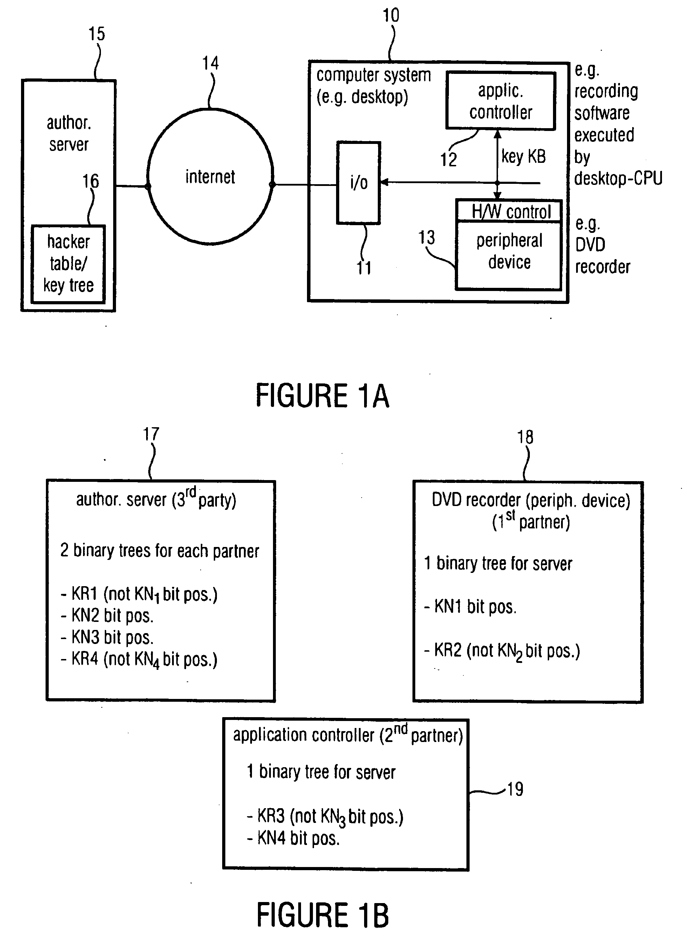

Fig. 1a shows a set-up in which the inventive method can, preferably, be performed. Particularly, Fig. 1a shows a computer system 10, which can be a desktop computer, so that all devices shown in block 10, such as an input/output interface 11, an application controller 12 and a peripheral device 13 are all located within the same case of the computer system. Alternatively, however, the computer system can also be a local area network, for example, in a company or an entity, which includes an input/output interface 11, an application controller 12 and a peripheral device 13. Nevertheless, for ease of description, the present invention is described in connection with a desktop computer having a DVD recorder as the first communication partner corresponding to the peripheral device 13. The desktop computer furthermore has an application controller 12 as the second communication partner, the application controller corresponding to the recording software for controlling the DVD recorder, which is executed by the desktop CPU.

The desktop computer 10 is connected to the Internet 14 via the input/output interface. Also connected to the Internet is an authorization server 15 acting as the third party, which has stored on it information on authorized or unauthorized devices, which information can be included within a hacker table or, preferably, a binary key tree, as will be outlined later on.

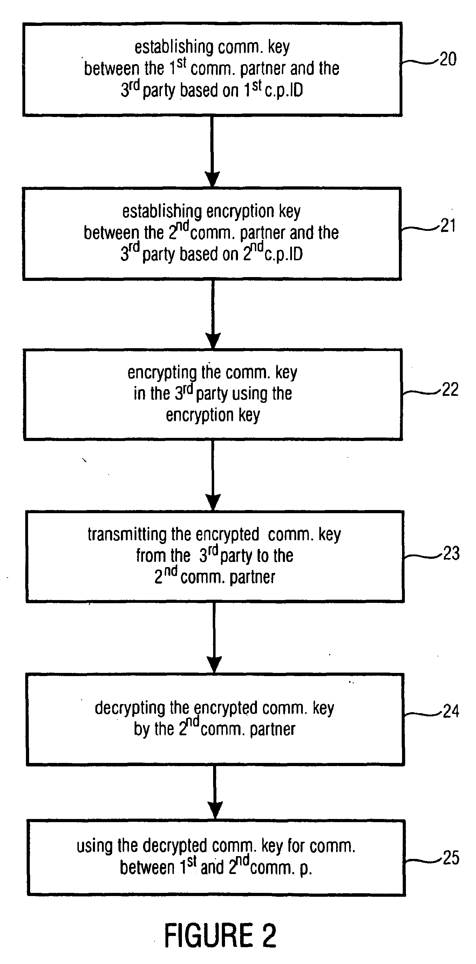

Fig. 2 shows a preferred sequence of steps for being able to obtain a secure communication between the first communication partner 13 and the second communication partner 12 in Fig. 1a. In a first step 20, a communication key between the first communication partner and the third party is established, wherein this step of establishing is performed based on an identification of the first communication partner and is performed such that the communication does not include the communication key in plain text. Any of well-known key establishment methods for generating a communication key or a session key can be used for establishing the communication key between the first communication partner and the third party. At the end of the step of establishing 20, the first communication partner as well as the third party know the communication key.

In a subsequent step 21, an encryption key different from the communication key obtained in step 20 is established between the second communication partner and the third party based on the identification of the second communication partner. Particularly, establishment of the encryption key in step 21 takes place so that the encryption key is not transmitted in plain text. This avoids that the first communication partner can obtain knowledge of the encryption key to - by itself - start communication with the second communication partner using this encryption key instead of the communication key established in step 20.

In step 22, the communication key established in step 20 is encrypted in the third party using the encryption key generated in step 21. The encrypted communication key obtained in step 20 is then transmitted in step 23 from the third party to the second communication partner. In step 24, the encrypted communication key from step 23 is received by the second communication partner and decrypted by the second communication partner, so that the second communication partner can use the decrypted communication key output at step 24 for a communication between herself or himself and the first communication partner as outlined in step 25 of Fig. 2. It is to be noted that the first communication partner already knows the communication key, because of step 20.

Generally, the key establishment between the involved parties performed in steps 20 and 21 can be performed by any of the known methods for key establishment, such as the Diffie-Hellman key exchange method, or any other cryptographic protocol, which is based on symmetric or asymmetric encryption. Additionally, for efficiency reasons, the same cryptography protocols can be performed in steps 20 and 21. Importantly, and for efficiency reasons, the key established between the third party and one of the communication partners is already the final communication key, while the key established between the third party and the other communication partner is only an intermediate key used for encrypting the communication key and for transmitting the encrypted communication key to the other communication partner.

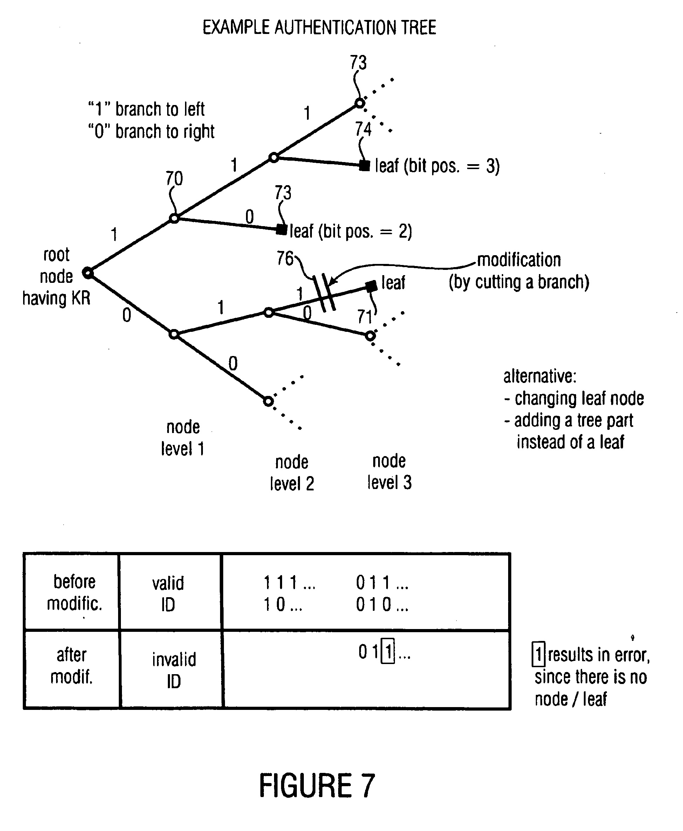

Preferably, a binary tree is used in a two-stage key establishment procedure as used in steps 20 and 21. Such a binary tree is exemplarily indicated in Fig. 7. A tree is characterized by a root node having a root key KR and branches. Two different kinds of branches exist. The first kind is a branch directed to a further node, which, again, is connected to two branches. Such an "intermediate" node is shown at 70 in Fig. 7. Furthermore, the binary tree has leaves, which terminate a branch. An exemplary leaf is shown at 71 in Fig. 7. Furthermore, the direction of branching, i.e. whether one has to branch to the left or branch to the right, is governed by a bit of a binary identification. An example is shown in Fig. 7 in which it is branched to the left when the corresponding bit corresponding to a certain node level has a binary "1", while it is branched to the right when the corresponding bit has "0".

In the Fig. 7 embodiment, the most significant bit of the identification is used for branching from the root node to node level 1. Alternatively, also the least significant bit of the identification number can be used for branching from the root node to the node level .1 and for the subsequent parsing or walking through the authentication tree.

Preferably, the identification number is a 40 bits number, which is assigned to each authorized recording device. Each bit of this number is preferably assigned a 128 bit node key. The node key assigned to the most significant bit is unique to that device. The node key assigned to the second-most significant bit (bit 38) is shared by two devices, and so on. Generally, the node key Kₙ is shared by 2⁽³⁹⁻¹⁾ devices.

Such an identification number is then used, in contrast to the Fig. 7 example, the least significant bit of the identification number is used for doing the branching to node level 1, etc.

Generally, one bit of the identification number after the other is read in and interpreted to find the correct branching direction at a node at a node level. To reach leaf 71 in an authentication tree without modification, the identification number starts with "011". After 3 bit positions or identification number bits, the leaf node 71 is reached and the corresponding authentication key or leaf key, i.e. a key associated with leaf 71, is retrieved. Alternatively, in order to reach leaf 72, the identification number starts with "10".

When the identification number starts with "111", one reaches node 73, which is not yet a leaf node, so that further bits of the identification number have to be processed to finally reach a leaf node to obtain the key associated with this leaf node. When the identification number is structured as stated above, then the bits of the identification number are processed, starting from the least significant bit and are, therefore, processed from right to left, while the Fig. 7 embodiment is - for illustrative reasons - illustrated in that the bits of the identification number are processed from left to right.

Generally, an authentication key, therefore, consists of the root key KR, the tree structure, i.e. where the leaves are in the tree and the leaf keys or authentication keys, which are associated with a leaf. Generally, a leaf has a unique authentication key associated therewith. It is not necessarily the case that each leaf has an authentication key associated therewith. For communicating between only two communication partners, it is sufficient that the binary tree has only a single leaf having a single leaf key.

In the inventive scenario, however, it is preferred to use a single tree for communication with many DVD recorders from different distributors having different identification numbers or to communicate with different software versions from the same or different distributors, each software version having a different identification number, so that in normal cases, a binary tree will have many leaves and, therefore, many leaf keys or authentication keys associated with the respective leaves.

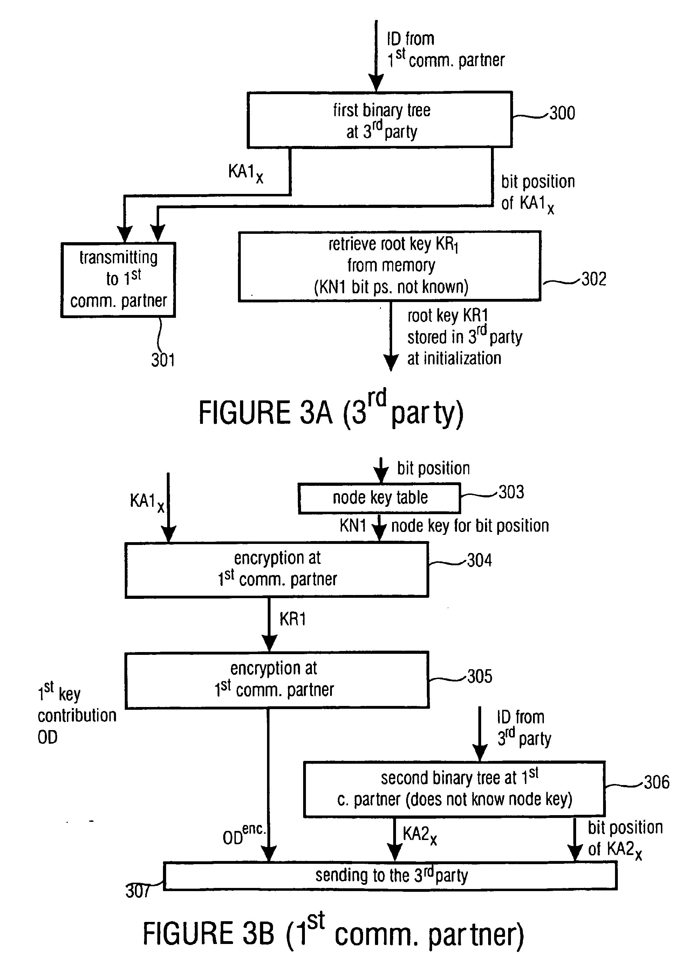

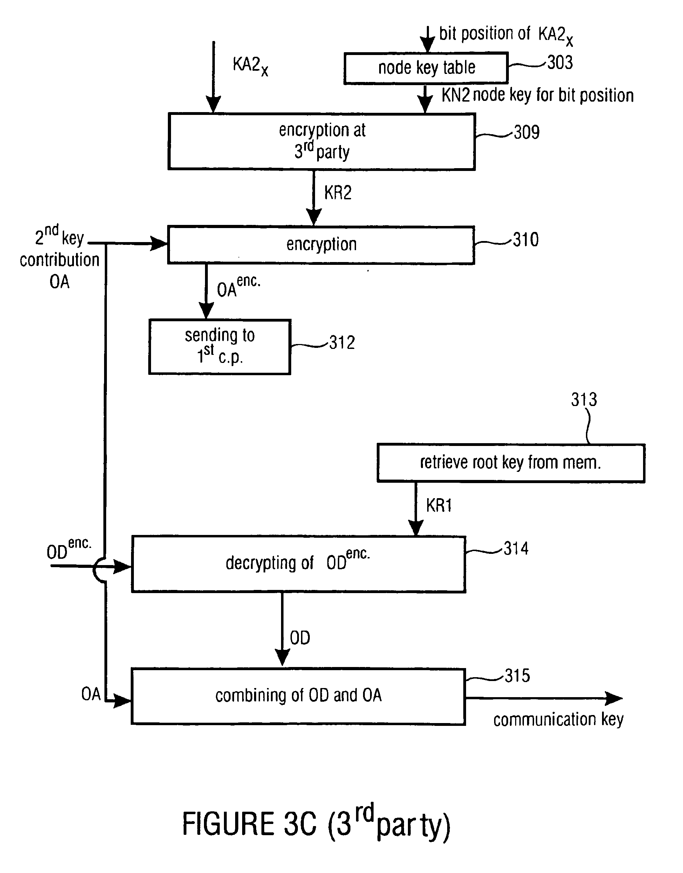

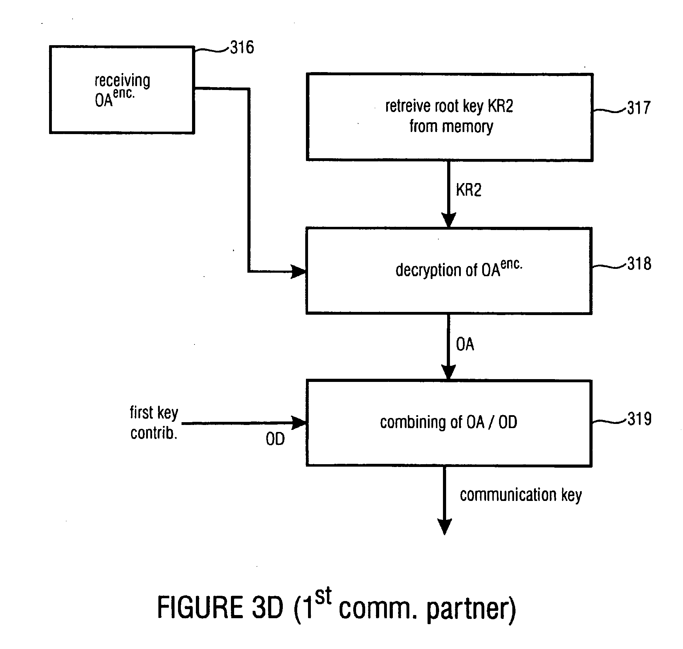

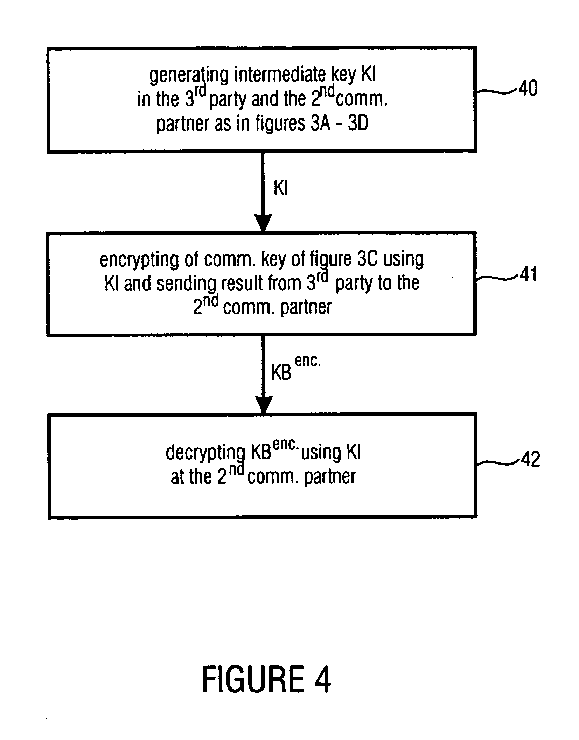

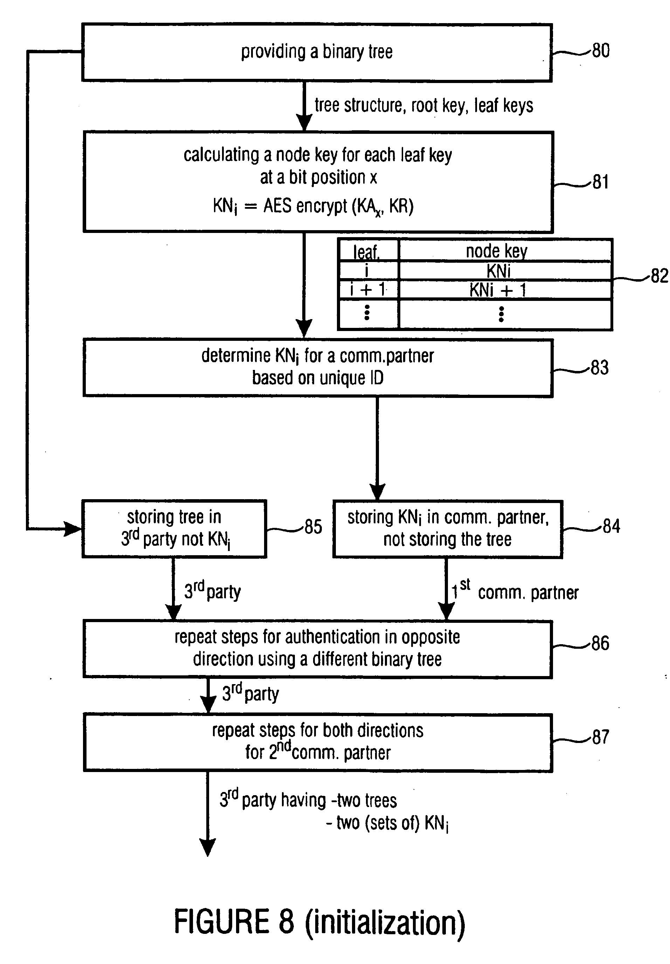

Before discussing the preferred communication protocol with respect to Figs. 3 and 4, it is regarded worthwhile to show the initialization taking place before the third party and the first and second communication partners are shipped. The initialization routine, which is shown in Fig. 8, preferably takes place before shipping the communication partners and the third party. In step 80, a binary tree is provided. As outlined in connection with Fig. 7, the binary tree includes the tree structure, the root key and the leaf keys. In step 81, a so-called node key is calculated for each leaf key at a certain bit position. Naturally, there can be several leaves at a single bit position, which is shown in Fig. 7 for node level 3 having leaf 71 and leaf 74. A node key KNᵢ for a bit position x and a certain leaf at this bit position is obtained by encrypting the root key KR using the leaf key associated with the leaf in question. Therefore, at the output of step 81, one obtains, for example, a node key table 82, which, for each leaf, has a node key. Each node key stored in table 82 in Fig. 8 is associated with a certain leaf of the binary tree of, for example, Fig. 7.

After several node keys for several leaves have been calculated in step 81, step 83 is performed for determining the node key KNᵢ for a communication partner based on a unique ID of the communication partner. When the communication partner is the peripheral device 13, such as a DVD recorder, the unique ID of the device is used for parsing the binary tree, as shown in Fig. 7. Particularly, one bit after the other of these bits of the unique ID of the DVD recorder are used to enter and process the tree one node level after the other. When, for example, a bit of the ID is 1, it is branched to the left, while when a bit is 0, it is branched to the right. When one encounters a leaf in the tree for the unique ID, the node key obtained in step 81 and stored in Table 82 for this leaf is determined and stored in the communication partner, such as the peripheral device 13 (DVD recorder). Importantly, this node key is not stored in the other communication partner or in the Fig. 8 embodiment, in the third party, which is the authorization server 15 in Fig. 1a. The third party receives the tree including the root key, the tree structure and the leaf keys. Thus, at the end of a valid initialization, the third party has the tree and the communication partner, which is the first communication partner in the Fig. 8 embodiment, has a certain node key, but does not have a tree, wherein the certain node key is associated to the identification number via the tree, which is, however, not stored within the DVD recorder, but only in the authorization server.

For authentication purposes in the opposite direction, steps 80 to 85 are repeated, as indicated in step 86. In contrast to steps 80 to 85 and for authentication in the opposite direction, the first communication partner receives a different binary tree, while the authorization server having a certain identification number receives a certain node key, which belongs to the authorization server via the different (second) binary tree.

In step 87, the initialization is continued for the second communication partner and the third party. Thus, the second communication partner also receives the certain node key being associated to its identification number via a third binary tree stored in the third party. Furthermore, the second communication partner also receives a binary tree, while the authorization server receives a node key associated with its identification number via the further (fourth) binary tree stored in the second communication partner.

At the end of the initialization, the information distribution as shown in Fig. 1b is obtained.

The authorization server, as the third party (box 17 in Fig. 1b), has two binary trees including the root key for each tree. The first tree has the root key KR₁ and the second binary tree has the root key KR₄. Furthermore, the authorization server has the node key KN₂ at a certain bit position belonging to the second binary tree stored in the DVD recorder (books 18 in Fig. 1b). Furthermore, the authorization server has a further node key KN₃ for a further bit position belonging to the third binary tree stored in the application controller (second communication partner), as shown in block 19 in Fig. 1b.

The Fig. 1b embodiment makes sure that a secure authentication not only takes place from the server to the first and second communication partners, but also takes place from the second communication partners to the authorization server. Therefore, a total number of four preferably different binary trees is required, wherein two binary trees are stored in the authorization server, while one binary tree is stored in each of the communication partners. Alternatively, when the authentication from the communication partner to the third party is not so important, no binary tree at all has to be stored in the DVD recorder or the application controller.

Furthermore, a simpler embodiment can also use only a single binary tree for the DVD recorder and the application controller. In this situation, it is preferred to use different identification numbers and, therefore, different node keys for the two communication partners.

Providing different binary trees for both communication partners however allows to deactivate a complete computer system, i.e. collectively deactivating the application controller and the peripheral device. When different binary trees are provided in the authorization server, one communication partner out of two communication partners can be deactivated, while the other communication partner is maintained in an active state.

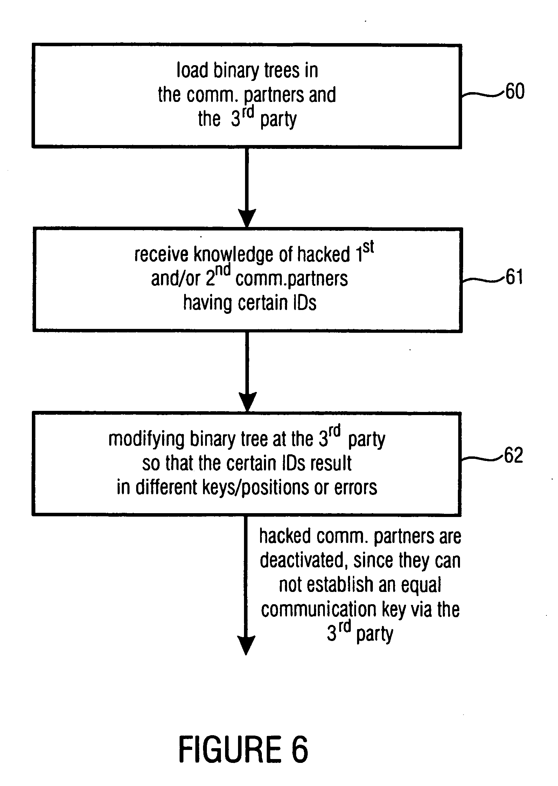

Subsequently, it will be discussed in connection with Fig. 7 as to how deactivation can take place. Additionally, reference is also made to Fig. 6. In the initialization setting, as has been discussed in connection with Fig. 8, several binary trees are loaded into the different devices before shipping those devices as shown at step 60 in Fig. 6. During the operation of application software and DVD recorders, the operator of the authorization observer, i.e. of the third party then receives knowledge (step 61) of a hacked first and/or second communication partner having certain IDs. This means that the operator of the authorization server receives knowledge that there are insecure devices, which produce unauthorized DVDs. In prior art scenarios, this would mean that the complete algorithm, etc. would have to be replaced. This is due to the fact that there is normally no access to the desktop computer residing at a customer or residing in a private home or an office.

In accordance with the present invention, however, devices, which are known to be hacked, and which are known to be insecure devices can be selectively deactivated by only modifying the authorization server. Particularly, the hacker table 16 or the key tree 16 has to be modified, as indicated in step 62. The modification of the authorization server, which is easily done by simply uploading new data into the authorisation server, which is in easy access range for the operator, certain identification numbers can be deactivated. Modification of the authorization server results in a situation in which the certain Ids, which are associated with the devices hacked, result in different keys or even errors, so that the hacked communication partners cannot establish a common communication key anymore in the key establishment sequence, which takes place via the authorization server.

In a preferred: embodiment of the present invention, several possibilities exist to modify the tree. The first preferred modification would be to cut a branch. This means that leaf 71, for example, is cut, as indicated by 76 in Fig. 7. When the second bit of the identification number is 1 and when the third bit of the identification number is a binary one, the third party will output an error, since each ID starting with bits "011" will try to walk through the tree although a branch is terminated without a valid leaf key.

An alternative modification would be to change the key associated with a leaf node. Then, the node key stored in the communication partner would not match any more with the leaf key, which has been modified in step 62.

This would result in a situation in which the communication partner cannot establish a key with the third party, so that the third party cannot provide an understandable secret to the communication partner for establishing the communication key.

An again alternative way to modify the tree in the authorization server would be to cut leaf 71 and to add a tree part having several branches and possibly some additional leaves, which can be reached due to a certain identification number. In this case, there might be a situation in which the deactivated identification number results in a leaf key. This leaf key, however, will not match with the node key stored in the communication partner, so that, again, no useful communication can be performed for establishing keys.

In some cases, it will not be possible to individually find out the specific individual device that has been hacked. Generally, knowledge will be received in step 61 that a certain software version or a certain device class provided by a certain manufacturer has been hacked. Preferably, the identification numbers and the node keys are associated and allocated to certain software versions and certain manufacturers, so that each identification number from a certain manufacturer will, as the third bit, for example, have a binary "1" and as the first two bits, will have the bit combination "01". By cutting leaf 71, all devices from a certain manufacturer can then be deactivated by only modifying one position within the tree in the Fig. 7 embodiment. However, all other software versions from other manufacturers or from the same manufacturer, but which are still known to be sure will have one of the remaining valid IDs, such as "111", "10", "010" as the first bits, so that these devices having those identification numbers will not notice anything regarding the deactivation of the other devices. Subsequently, Figs. 3a to 3d are discussed to illustrate the preferred embodiment of the present invention for establishing a communication key between the first and second communication partners via the third party.

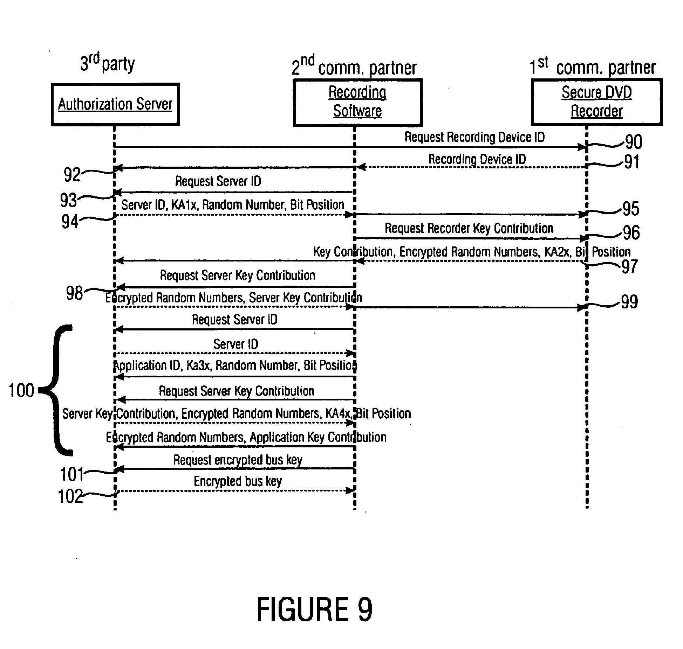

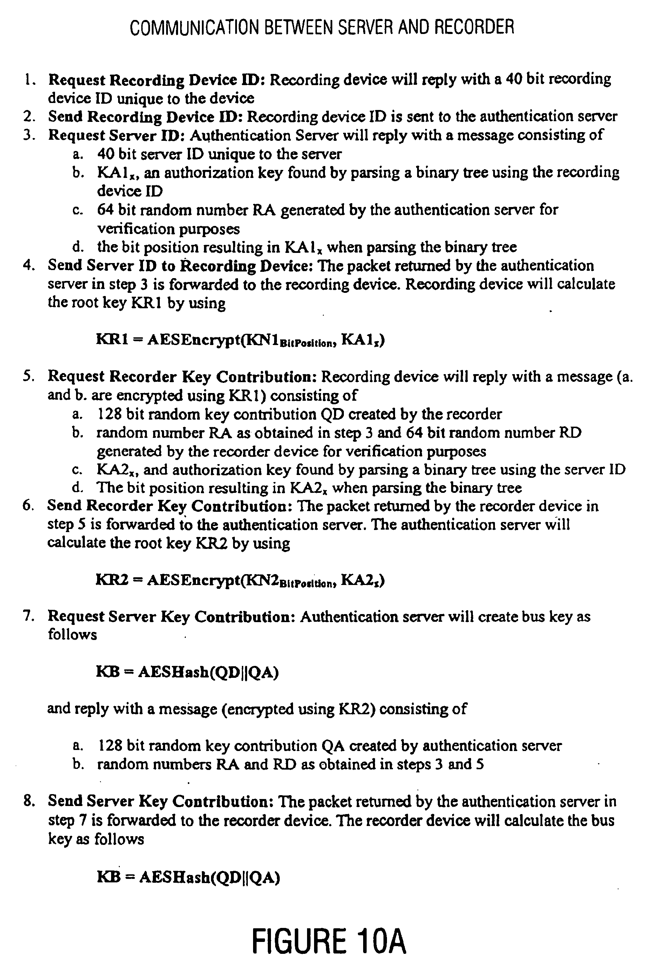

In response to a user request or a computer system request to write onto a DVD using the peripheral device 13, the third party will request the recording device ID, as shown at "1" in Fig. 10a. This step is also indicated at 90 in Fig. 9. The recording device will then reply with a 40 bit recording device ID unique to the device, as shown at 91 in Fig. 9 when the peripheral device 13 is connected to the input/output interface 11 of Fig. 1a directly. Communication from the DVD recorder to the authorization server will not have to be performed through the application controller 12. This situation is shown in Fig. 1a. However, situations exist in which the DVD recorder cannot communicate directly to the input/output in the case of the computer system, but can only communicate with the application controller 12. In this case, the application controller 12 will forward the communications to the peripheral device from the authorization server or will forward communications from the peripheral device to the authorization server. Fig. 9 shows the situation in which the complete communication from the DVD recorder to the authorization server has to pass the application controller 12. In response to step 91, the recording software will simply forward the recording device ID to the authorization server (92). The authorization server will then receive the identification number from the first communication partner and will parse the first binary tree at the third party, as shown in step 300. Parsing of the binary tree, for example, the tree of Fig. 7, will result in a certain node key KA₁ₓ and a certain bit position of the node key KA₁ₓ. This information will be transmitted to the first communication partner, as shown in step 301. Furthermore, the third party can retrieve the root key KR₁ from the memory. Nevertheless, the node key associated with the authorization key or leaf key KA₁ₓ is not known to the third party (books 302 in Fig. 3a).

As shown in Fig. 9, the steps in Fig.3a are initiated via a request server ID action provided by the recording software, as shown at 93 in Fig. 9.

As shown in Fig. 10a, item 3.b, the server transmits (step 301) the authorization key KA₁ₓ and the bit position, as shown at 94 in Fig. 9. Additionally, in preferred embodiments, the server also provides at this time, its server ID, which is unique to the server and which allows the recording software and the DVD recorder to authenticate the server, so that there cannot come an unauthorized server providing the communication partners with an unlawful communication key.

In preferred embodiment and as shown at 3 in Fig. 10a, the server also generates and transmits the 40 bit random number for verification purposes.

Information included in message 94 is forwarded from the recording software to the DVD recorder at 95 in Fig. 9. In response to this message, a request recorder key contribution is forwarded from the recording software to the DVD recorder at 96. The steps and actions performed by the DVD recorder or first communication partner are indicated in Fig. 3b. Based on the bit position, the DVD recorder accesses its node key table for obtaining a certain node key for a bit position obtained from the third party by the transmission in step 301. The DVD recorder then encrypts the authorization key KA₁ₓ received from the third party using the node key, as indicated at 4 in Fig. 10a. This encryption (304) will result in the root key KR₁ for the first binary tree used in step 300 at the third party when the communication partner under consideration has not been deactivated before.

The first communication partner then generates a first key contribution OD and encrypts this key contribution using the root key KR₁, as shown at 305. Furthermore, as shown at 306, the first communication partner uses the identification number from the third party and parses the second binary tree provided for communication with the authorization server and outputs a leaf key KA₂ₓ and a bit position associated with this leaf key, wherein the bit position is obtained by parsing the second binary tree stored in the first communication partner, but not stored in the authorization server. The encrypted key contribution and the second authorization key at the bit position for the second authorization key are then sent to the third party, as-shown at 307. Additionally, a random number is obtained in step 3 in Fig. 10a and a 64 bit random number RD generated by the recorded device are also sent from the DVD recorder to the recorded software and then to the authorization server as shown at 97 in Fig. 9. The actions and steps shown in Fig. 3c are then again performed at the third party using the information received from the first communication partner. The authorization server now accesses its node key table 384 retrieving the node key for a certain bit position associated with the tree stored in the first communication partner. As shown at 6 in Fig. 10a, the authorization key KA₂ₓ received in message 97 in Fig. 9 is then encrypted using the retrieved node key to generate the root key KR₂ as the result of the encryption step 309, which should be identical to the root key of the second binary tree used in step 306 at the first communication partner, when the first communication partner is still activated.

Then, the third party generates its own key contribution OA and encrypts (step 310) the second key contribution via the root key KR2 and provides the encrypted key contribution to the first communication partner as shown at 312. Preferably, this is done in response to a request server key contribution message 98 from the recording software to the authorization server. Then, step 312 in Fig. 3c is performed, which corresponds to step 99 in Fig. 9.

Then, the third party will retrieve the root keys for the first binary tree from the memory as shown at 313 to decrypt the received key contribution from the first communication partner (step 314) to obtain the decrypted key contribution OD, which is combined with the second key contribution OA in step 315. Preferably, the combination in step 315 will be performed using a cryptographic hash function as shown at 7 in Fig. 10a, wherein the cryptographic part of the hash function is preferably the AES algorithm. At the output of block 315, the communication key is generated in the third party. In the first communication partner, several steps as shown in Fig. 3d are performed to also calculate the communication key in the first communication partner. To this end, the first communication partner receives the encrypted key contribution from the authorization server as shown at 316. Furthermore, the first communication partner retrieves his root key KR2 from its memory as shown at 317. This root key KR2 is used for decrypting the received encrypted key contribution as shown art 318. Step 318 results in the key contribution OA in plain text, which has been generated in the authorization server. Then, the first key contribution and the second key contribution are combined 319, wherein the same combination algorithm as used in step 315 is used in step 319 so that the first communication partner has also calculated the communication key for communicating with the second communication partner.

However, in this moment, no such communication is possible, since the second communication partner, i.e., the recording software is not in the possession of the communication key. Although the complete communication was performed via the second communication partner as shown in Fig. 9, the second communication partner did not have any chance to gather the communication key, since the recording software only received encrypted messages and forwarded these encrypted messages without having any knowledge of the key which has been used for encrypting these messages.

Thus, step 319 in Fig. 3d corresponds to step 8 in Fig. 10a, while step 7 in Fig. 10a corresponds to step 315 in Fig. 3c. Furthermore, step 6 in Fig. 10a corresponds to step 309 to generate the second root key useful for encrypting the key contribution from the server before transmitting the encrypted key contribution to the first communication partner as shown in step 312 in Fig. 3c.

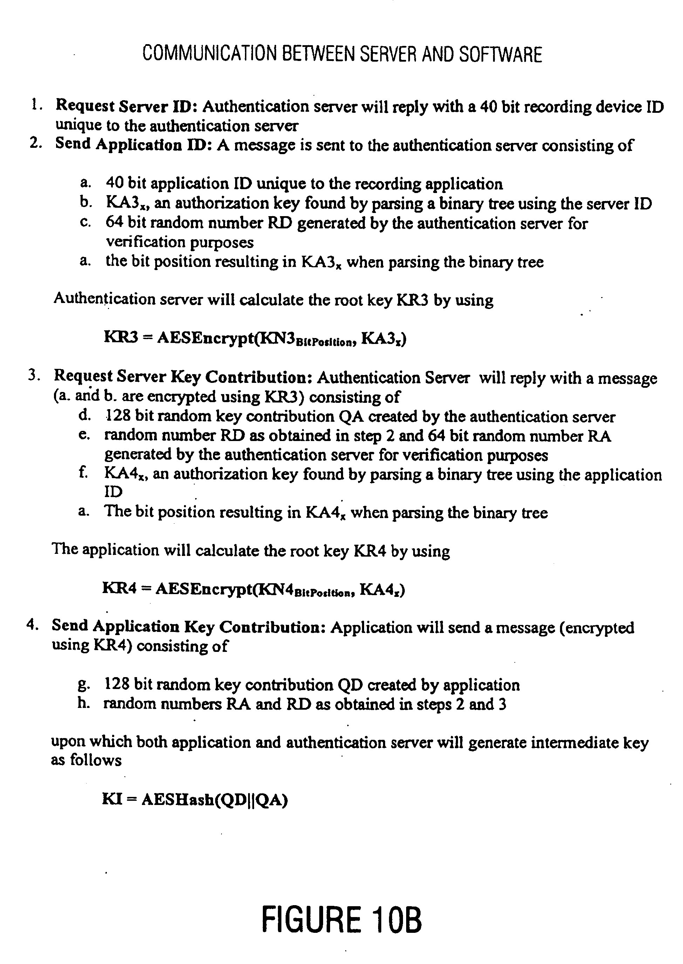

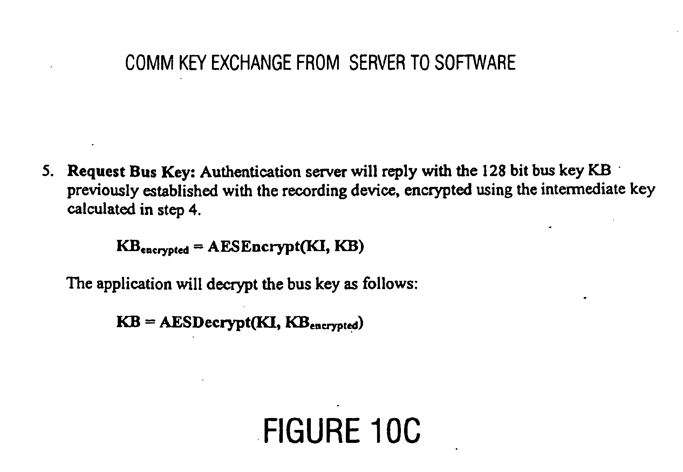

Then, regarding Fig. 10b, a similar communication between the authorization server and the recording software is performed for establishing an intermediate key KI between the authorization server and the recording software. To this end, several steps and messages 100 are performed. All these steps 100 are performed to generate and establish a cryptographic key between the authorization server and the recording software, based on which the authorization server can communicate the communication key as generated in step 315 in Fig. 3c to the recording software. This communication key change is shown in Fig. 10c and is also shown in Fig. 4. By means of messages 100 in Fig. 9, an intermediate key in the third party and the second communication partner is generated as shown at 40 in Fig. 4. Then, in response to a request encrypted bus key message 101, the authorization server encrypts the communication key using the intermediate key and sends the result from the third party to the second communication partner as shown at 5 in Fig. 10c. In response to the encrypted bus key transmission 102, the second communication partner will decrypt the bus key using the intermediate key as shown in the last line of Fig. 10c (box 42 in Fig. 4). Now, the first communication partner as well as the second communication partner have the same communication key KB so that the recording software can use this key for encrypting any image data to be recorded on the DVD before sending these data to the peripheral device. The peripheral device will, then, receive these encrypted data and write the encrypted data directly onto the DVD recorder. Preferably, however, the data is decrypted within the peripheral device and encrypted into another representation. Preferably, the encryption of the image data before writing these data onto the DVD are performed by scrambling using a certain scrambling key, which is preferably also included in the DVD data.

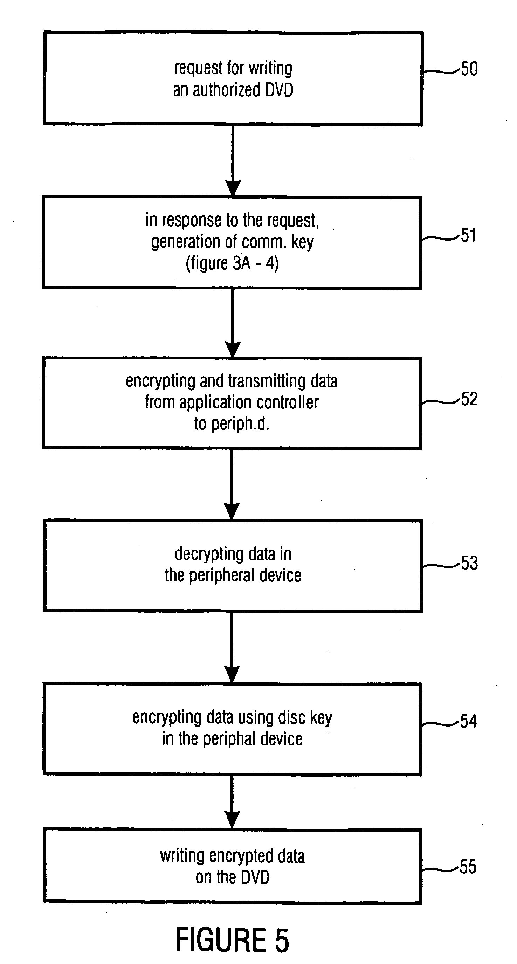

Thus, the complete sequence of steps in a preferred embodiment of the present invention is shown in connection with Fig. 5 on a higher logical level.

A request for writing an authorized DVD is issued at 50 in Fig. 5 by the recording software or the DVD recorder itself. Then, in response to this request, which could also be a request for a communication between a first communication partner and the second communication partner, a communication key is generated as indicated in Fig. 3a to 4 as indicated at 51 in Fig. 5. Then, data is encrypted and transmitted from the first communication partner to the second communication partner as shown in 52 of Fig. 5. Then, within the second communication partner, the data is decrypted (53) and encrypted using a disc key as shown at 54. The encryption in block 54 is done using a disc key, which is preferably different from the communication key used for communicating between the first and the second communication partners. Finally, the encrypted data is written on the DVD as shown at 55 in Fig. 5. Thus, it is assured that authentic DVDs cannot only be pressed but can also be produced by a computer system 10. However, as soon as one receives knowledge from an un-lawful application controller or peripheral device, such entities can easily be deactivated by simply modifying data at the authorization server such as by modifying a hacker table or a key tree for the respective un-lawful device.

To summarize, the present invention relates to a method for controlling data transfer between the computer device and the peripheral device being an optical disc drive, electro-magnetic mass storage device or other storage facility connected to a computer device. Furthermore, the present invention relates to a computer device comprising a processing unit, a storage unit and an interface unit for communicating with the peripheral device, said peripheral device presenting a communication sink when connected to the computer device.

Furthermore, the invention relates to central authority controlling the communication between the devices by conveying a shared secret required for encrypting/decrypting the communication between the devices only to authorized participating devices. The central authority is unique to all participating components and is preferably located in the internet, to which all participating devices are directly or indirectly connected.

The invention also relates to a peripheral device that is connected to the internet using the computer devices as a proxy. A proxy is a device that merely forward packets of data from one point to another without modifying them. The invention also relates to the functionality of the computer device being implemented in software that can be changed when it becomes unauthorized.

The present invention is suitable for controlling a data transfer between a computer device and a peripheral device being an optical disc drive, an electro-magnetic mass storage device or other storage facility connected to the computer device. The data transfer is controlled by means of the central authority controlling the communication between the devices by conveying a shared secret required for encrypting/decrypting the communication between the devices only to authorized participating devices. The shared secret is conveyed by exchanging data packets that can be understood only by authorized communication partners. The central authority has the possibility to revoke both the computer device and the peripheral device based on a preferably 40 bit identification number assigned to each revision of the computer device and to each peripheral device. The central authority will work only if it is known to both devices to be authorized, i.e., it can read the packet sent by those devices such that a central authority is not authorized and will not understand the packets sent by peripheral device and computer device and cannot be used to obtain the shared secret. The exchange of data packets is done through a proxy that is a machine that will forward packets of data as used for creating the shared secret between two devices. Any device participating in the communication is implemented in software or partially implemented in software. The 40 bit identification number is then assigned to each revision of the software controlling a computer device or peripheral device.

Depending on certain implementation requirements of the inventive methods, the inventive methods can be implemented in hardware or in software. The implementation can be performed using a digital storage medium, in particular a disk or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

The above-described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Method of establishing a communication key for a communication between a first communication partner and a second communication partner, comprising:
establishing (20) the communication key between the first communication partner (13) and a third party (15) based on an identification of the first communication partner,
wherein a communication between the first communication partner and the third party does not include the communication key in plain text;
establishing (21) an encryption key based on an identification of the second communication partner (12),
wherein the encryption key is known to the second communication partner and the third party, the first communication partner (13) not knowing the encryption key;
encrypting (22) the communication key based on the encryption key by the third party (15);
transmitting (23) the encrypted communication key from the third party (15) to the second communication partner (12); and
decrypting the encrypted communication key by the second communication partner (12),
wherein the third party (15, 17), the first communication partner (13, 18) or the second communication partner (12, 19) is operative, in the step of establishing (20) the communication key or in the step of establishing (21) an encryption key to perform the following steps,
parsing a binary key tree having a root key (KR1) associated with a respective entity among the third party (15, 17), the first communication partner (13, 18) and the second communication partner (12, 19) using the identification of the respective entity to obtain an authentication key (KA1);
transmitting the authentication key to the respective entity;
receiving an encrypted key contribution from the respective entity, wherein the key contribution has been encrypted by the respective entity using the root key of the binary key tree, and wherein the root key of the binary key tree has been calculated in the respective entity by encrypting the authentication key using a node key stored in the respective entity.
decrypting the encrypted key contribution using the root key (KR1) from the binary key tree associated with the respective entity, and
combining the decrypted key contribution and a self-generated key contribution to generate the communication key or the encryption key.

2. Method of operating a first communication partner (13) for performing a communication with a second communication partner (12), comprising:
in response to a request for communication between the first communication partner and the second communication partner, communicating (20) with the third party (15) by
transmitting an identification to the third party;
receiving an authentication key from the third party, the authentication key being obtained by the third party by parsing a binary key tree having a root key (KR1) associated with the first communication partner (13, 18) using the identification of the first communication partner;
calculating the root key (KR1) of the binary key tree by encrypting (304) the authentication key (KA1) using a node key (KN1) stored in the first communication partner;
encrypting (305) a self-generated key contribution using the root key (KR1);
transmitting the self-generated encrypted key contribution to the third party;
decrypting an encrypted key contribution received from the third party; and
combining the decrypted key contribution and the self-generated key contribution to generate the communication key; and
encrypting or decrypting data (25) to be transmitted to or received from the second communication partner based on the communication key.

3. Method in accordance with claim 2, further comprising the following steps:
receiving (90) a request for the identification number of the first communication partner from the third party;
receiving an identification of the third party;
sending a second authentication key found by parsing a further binary key tree having a further root key (KR2) stored at the first communication partner using the identification of the third party to the third party;
receiving a third party key contribution encrypted using a second root key derived at the third party by calculating the further root key (KR2) of the further binary key tree by encrypting the further authentication key (KA2) using a node key (KN2) stored in the third party;
decrypting the third party key contribution using the further root key (KR2) stored at the first communication partner.

4. Method of operating a second communication partner for performing a communication with a first communication partner using a communication key, comprising:
communicating with a third party, wherein an encryption key is established based on an identification of the second communication partner, wherein the step of establishing includes:
transmitting an identification to the third party;
receiving an authentication key from the third party, the authentication key being obtained by the third party by parsing a binary key tree having a root key (KR4) associated with the second communication partner (12, 19) using the identification of the second communication partner;
calculating the root key (KR4) of the binary key tree by encrypting (304) the authentication key (KA4) using a node key (KN4) stored in the second communication partner;
encrypting a self-generated key contribution using the root key (KR4);
transmitting the self-generated encrypted key contribution to the third party;
decrypting an encrypted key contribution received from the third party; and
combining the decrypted key contribution and the self-generated key contribution to generate the communication key;
receiving the communication key encrypted based on the encryption key, from the third party;
decrypting (42) the encrypted communication key to obtain the encryption key in plain text; and
encrypting (25) or decrypting (53) data to be transmitted to or received from the first communication partner based on the communication key.

5. Method of operating a third party for establishing a communication key between a first communication partner and a second communication partner, comprising:
communicating with the first communication partner, wherein a communication key between the first communication partner and the third party is established based on an identification of the first communication partner, comprising:
receiving an identification of the first communication partner;
parsing a binary key tree having a root key (KR1) associated with the first communication partner (13, 18) using the identification of the first communication partner to find an authentication key (KA1);
transmitting the authentication key to the first communication partner;
receiving an encrypted key contribution from the first communication partner, the encrypted key contribution being encrypted using the root key of the binary key tree,
decrypting the encrypted key contribution using the root key (KR1) from the binary key tree associated with the first communication partner, and
encrypting a first self-generated key contribution and sending the encrypted first self-generated key contribution to the first communication partner;
combining the decrypted key contribution and the first self-generated key contribution to generate the communication key;
communicating with the second communication partner, wherein an encryption key is established based on an identification of the second communication partner, comprising:
receiving an identification of the second communication partner;
parsing a further binary key tree having a further root key associated with the second communication partner (13, 18) using the identification of the second communication partner to find a further authentication key;
transmitting the further authentication key to the second communication partner;
receiving an encrypted key contribution from the second communication partner, the encrypted key contribution being encrypted using the further root key of the further binary key tree,
decrypting the encrypted key contribution using the further root key from the further binary key tree associated with the second communication partner, and
encrypting a second self-generated key contribution and sending the encrypted second self-generated key contribution to the second communication partner;
combining the decrypted key contribution and the second self-generated key contribution to generate the encryption key,
wherein the binary key tree is identical to the further binary key tree and the first communication partner identification is different from the second communication partner identification or wherein the binary key tree is different from the further binary key tree,
encrypting (22) the communication key using the encryption key; and
transmitting (23) the encrypted communication key to the second communication partner.

6. Method in accordance with claim 1 or 5,
further comprising the step of terminating, by the third party, the communication with the first communication partner, if the identification number of the first communication partner results in an invalid tree state, or if the identification number of the first communication partner results in a modified authentication key, if the first communication partner is revoked.

7. Method in accordance with claim 1, 5 or 6,
further comprising the step of terminating, by the third party, the communication with the second communication partner, if the identification number of the second communication partner results in an invalid tree state, or if the identification number of the second communication partner results in a modified authentication key, if the second communication partner is deactivated.

8. Method in accordance with any one of claims 1, 5, 6 or 7, in which the third party is operative to generate a third party key contribution and to encrypt the generated key contribution using an encryption key derived by using a stored node key and a received authentication key, in which the first communication partner or the second communication partner is operative to generate a respective key contribution and to encrypt the generated key contribution using an encryption key generated based on a stored node key and a received authentication key.

9. Method in accordance with claim 8, in which the combination of the decrypted key contribution and the self-generated key contribution is performed using a cryptographic hash function (315).

10. Method in accordance with any one of the preceding claims, in which the third party, the first communication partner or second communication partner is operative to store a binary key tree, to parse the binary key tree using an identification from a communication entity for finding out an authentication key at a leaf of the binary key tree at a certain bit position and to transmit the authentication key to the communication entity.

11. Method in accordance with claim 10, in which the transmission of the authentication key to the communication entity furthermore includes the bit position indicating a tree level, at which a valid leaf has been detected.

12. Method in accordance with claim 10 or 11, in which the transmission of the authentication key to the communication entity furthermore includes a random number used for verification purposes.

13. Method in accordance with any one of the preceding claims, in which the third party, the first communication partner or the second communication partner includes a random number generator for generating a key contribution as a random number having a specified number of bits.

14. Method in accordance with any one of the preceding claims, in which the first and second communication partners are provided within a computer system, the computer system being connected to the third party via the internet so that the third party is positioned remotely with respect to the first and second communication partners.

15. Method on accordance with claim 14, in which the first communication partner is a DVD recorder, a device for writing on a magnetic storage medium or another mass storage device, wherein the second communication partner is an application software for controlling the device.

16. Method in accordance with claim 14 or 15, in which the second communication partner includes a proxy server used for channelling messages between the third party and the first communication partner, wherein the first communication partner is not connected directly to an input/output interface (11) of the computer system (10).

17. Method in accordance with any one of claims 1 or 5, further comprising the following step:
receiving knowledge of a first communication partner and/or second communication partner being in an un-lawful state; and
modifying the third party so that the step of establishing a communication key or an encryption key between the third party and the first or second communication partner based on an identification of the first or second communication partner will not result in a communication key or encryption key, which is identical at the third party and at the first or second communication partner.

18. Method in accordance with claim 17, in which the step of modifying the third party includes a step of modifying the binary key tree, wherein the step of modifying the binary key tree is performed by cutting a leaf node, modifying a key associated with the leaf node or substituting a leaf by an additional branch or a plurality of branches.

19. Method in accordance with any one of the preceding claims, in which the identification number identifying the first communication partner, the second communication partner or the third party is hierarchically formed so that different bits having different significances are associated with different numbers of devices.

20. Method in accordance with claim 19, in which a group of all devices from a manufacturer or a group of all devices having the same software version or a group of all devices having the same hardware version have at least one bit of their identification numbers, which is identical for a group of devices.

21. Apparatus for establishing a communication key for a communication between a first communication partner and a second communication partner, wherein the communication key between the first communication partner (13) and a third party (15) is established based on an identification of the first communication partner, wherein a communication between the first communication partner and the third party does not include the communication key in plain text, wherein an encryption key is established based on an identification of the second communication partner (12), wherein the encryption key is known to the second communication partner and the third party, the first communication partner (13) not knowing the encryption key,
wherein the third party (15, 17), the first communication partner (13, 18) or the second communication partner (12, 19) is operative, for establishing (20) the communication key or for establishing (21) an encryption key,
to parse a binary key tree having a root key (KR1) associated with a respective entity among the third party (15, 17), the first communication partner (13, 18) and the second communication partner (12, 19) using the identification of the respective entity to obtain an authentication key (KA1);
to transmit the authentication key to the respective entity;
to receive an encrypted key contribution from the respective entity, wherein the key contribution has been encrypted by the respective entity using the root key of the binary key tree, and wherein the root key of the binary key tree has been calculated in the respective entity by encrypting the authentication key using a node key stored in the respective entity,
to decrypt the encrypted key contribution using the root key (KR1) from the binary key tree associated with the respective entity, and
to combine the decrypted key contribution and a self-generated key contribution to generate the communication key or the encryption key,
wherein the apparatus further comprises:
an encrypter for encrypting (22) the communication key based on the encryption key by the third party (15);
a transmitter for transmitting (23) the encrypted communication key from the third party (15) to the second communication partner (12); and
a decrypter for decrypting the encrypted communication key by the second communication partner (12).

22. Apparatus for operating a first communication partner (13) for performing a communication with a second communication partner (12), comprising:
a processor for communicating (20) with the third party (15) in response to a request for communication between the first communication partner and the second communication partner, by
transmitting an identification to the third party;
receiving an authentication key from the third party, the authentication key being obtained by the third party by parsing a binary key tree having a root key (KR1) associated with the first communication partner (13, 18) using the identification of the first communication partner;
calculating the root key (KR1) of the binary key tree by encrypting (304) the authentication key (KA1) using a node key (KN1) stored in the first communication partner;
encrypting (305) a self-generated key contribution using the root key (KR1);
transmitting the self-generated encrypted key contribution to the third party;
decrypting an encrypted key contribution received from the third party; and
combining the decrypted key contribution and the self-generated key contribution to generate the communication key; and
an en/decrypter for encrypting or decrypting data (25) to be transmitted to or received from the second communication partner based on the communication key.

23. Apparatus for operating a second communication partner for performing a communication with a first communication partner using a communication key, comprising:
a processor for communicating with a third party by:
transmitting an identification to the third party;
receiving an authentication key from the third party, the authentication key being obtained by the third party by parsing a binary key tree having a root key (KR4) associated with the second communication partner (12, 19) using the identification of the second communication partner;
calculating the root key (KR4) of the binary key tree by encrypting (304) the authentication key (KA4) using a node key (KN4) stored in the second communication partner;
encrypting a self-generated key contribution using the root key (KR4);
transmitting the self-generated encrypted key contribution to the third party;
decrypting an encrypted key contribution received from the third party; and
combining the decrypted key contribution and the self-generated key contribution to generate the encryption key;
a receiver for receiving the communication key encrypted based on the encryption key, from the third party;
a decrypter for decrypting (42) the encrypted communication key to obtain the communication key in plain text; and
an en/decrypter for encrypting (25) or decrypting (53) data to be transmitted to or received from the first communication partner based on the communication key.

24. Apparatus for operating a third party for establishing a communication key between a first communication partner and a second communication partner, comprising:
a processor for communicating with the first communication partner, wherein a communication key between the first communication partner and the third party is established based on an identification of the first communication partner, by:
receiving an identification of the first communication partner;
parsing a binary key tree having a root key (KR1) associated with the first communication partner (13, 18) using the identification of the first communication partner to find an authentication key (KA1);
transmitting the authentication key to the first communication partner;
receiving an encrypted key contribution from the first communication partner, the encrypted key contribution being encrypted using the root key of the binary key tree,
decrypting the encrypted key contribution using the root key (KR1) from the binary key tree associated with the first communication partner, and
encrypting a first self-generated key contribution and sending the encrypted first self-generated key contribution to the first communication partner;
combining the decrypted key contribution and the first self-generated key contribution to generate the communication key; and
communicating with the second communication partner, wherein an encryption key is established based on an identification of the second communication partner by
receiving an identification of the second communication partner;
parsing a further binary key tree having a further root key associated with the second communication partner (13, 18) using the identification of the second communication partner to find a further authentication key;
transmitting the further authentication key to the second communication partner;
receiving an encrypted key contribution from the second communication partner, the encrypted key contribution being encrypted using the further root key of the further binary key tree,
decrypting the encrypted key contribution using the further root key from the further binary key tree associated with the second communication partner, and
encrypting a second self-generated key contribution and sending the encrypted second self-generated key contribution to the second communication partner;
combining the decrypted key contribution and the second self-generated key contribution to generate the encryption key,
wherein the binary key tree is identical to the further binary key tree and the first communication partner identification is different from the second communication partner identification or wherein the binary key tree is different from the further binary key tree;
an encrypter for encrypting (22) the communication key using the encryption key; and
a transmitter for transmitting (23) the encrypted communication key to the second communication partner.

25. Computer program having program code means for performing the steps of the method of any one of claims 1 to 20, when running on a computer.

## Patentansprüche

1. Verfahren zum Erstellen eines Kommunikationsschlüssels für eine Kommunikation zwischen einem ersten Kommunikationspartner und einem zweiten Kommunikationspartner, das folgende Schritte umfasst:
Erstellen (20) des Kommunikationsschlüssels zwischen dem ersten Kommunikationspartner (13) und einer dritten Partei (15) basierend auf einer Identifikation des ersten Kommunikationspartners, wobei eine Kommunikation zwischen dem ersten Kommunikationspartner und der dritten Partei nicht den Kommunikationsschlüssel in Klartext umfasst;
Erstellen (21) eines Verschlüsselungsschlüssels basierend auf einer Identifikation des zweiten Kommunikationspartners (12), wobei der Verschlüsselungsschlüssel dem zweiten Kommunikationspartner und der dritten Partei bekannt ist, wobei der erste Kommunikationspartner (13) den Verschlüsselungsschlüssel nicht kennt;
Verschlüsseln (22) des Kommunikationsschlüssels basierend auf dem Verschlüsselungsschlüssel durch die dritte Partei (15);
Senden (23) des verschlüsselten Kommunikationsschlüssels von der dritten Partei (15) zu dem zweiten Kommunikationspartner (12); und
Entschlüsseln des verschlüsselten Kommunikationsschlüssels durch den zweiten Kommunikationspartner (12),
wobei die dritte Partei (15, 17), der erste Kommunikationspartner (13, 18) oder der zweite Kommunikationspartner (12, 19) bei dem Schritt des Erstellens (20) des Kommunikationsschlüssels oder bei dem Schritt des Erstellens (21) eines Verschlüsselungsschlüssels wirksam ist, um die folgenden Schritte durchzuführen:
syntaktisches Analysieren eines Binärschlüsselbaums, der einen Wurzelschlüssel (KR1) aufweist, der einer jeweiligen Entität aus der dritten Partei (15, 17), dem ersten Kommunikationspartner (13, 18) und dem zweiten Kommunikationspartner (12, 19) zugeordnet ist, unter Verwendung der Identifikation der jeweiligen Entität, um einen Authentifizierungsschlüssel (KA1) zu erhalten;
Senden des Authentifizierungsschlüssels an die jeweilige Entität;
Empfangen eines verschlüsselten Schlüsselbeitrags von der jeweiligen Entität, wobei der Schlüsselbeitrag durch die jeweilige Entität verschlüsselt wurde unter Verwendung des Wurzelschlüssels des Binärschlüsselbaums, und wobei der Wurzelschlüssel des Binärschlüsselbaums in der jeweiligen Entität berechnet wurde durch Verschlüsseln des Authentifizierungsschlüssels unter Verwendung eines Knotenschlüssels, der in der jeweiligen Entität gespeichert ist;
Entschlüsseln des verschlüsselten Schlüsselbeitrags unter Verwendung des Wurzelschlüssels (KR1) von dem Binärschlüsselbaum, der der jeweiligen Entität zugeordnet ist; und
Kombinieren des entschlüsselten Schlüsselbeitrags und eines selbsterzeugten Schlüsselbeitrags, um den Kommunikationsschlüssel oder den Verschlüsselungsschlüssel zu erzeugen.

2. Verfahren zum Betreiben eines ersten Kommunikationspartners (13) zum Durchführen einer Kommunikation mit einem zweiten Kommunikationspartner (12), das folgende Schritte umfasst:
ansprechend auf eine Anforderung nach Kommunikation zwischen dem ersten Kommunikationspartner und dem zweiten Kommunikationspartner, Kommunizieren (20) mit der dritten Partei (15) durch
Senden einer Identifikation an die dritte Partei;
Empfangen eines Authentifizierungsschlüssels von der dritten Partei, wobei der Authentifizierungsschlüssel durch die dritte Partei erhalten wird durch syntaktisches Analysieren eines Binärschlüsselbaums, der einen Wurzelschlüssel (KR1) aufweist, der dem ersten Kommunikationspartner (13, 18) zugeordnet ist, unter Verwendung der Identifikation des ersten Kommunikationspartners;
Berechnen des Wurzelschlüssels (KR1) des Binärschlüsselbaums durch Verschlüsseln (304) des Authentifizierungsschlüssels (KA1) unter Verwendung eines Knotenschlüssels (KN1), der in dem ersten Kommunikationspartner gespeichert ist;
Verschlüsseln (305) eines selbsterzeugten Schlüsselbeitrags unter Verwendung des Wurzelschlüssels (KR1);
Senden des selbsterzeugten verschlüsselten Schlüsselbeitrags an die dritte Partei;
Entschlüsseln eines verschlüsselten Schlüsselbeitrags, der von der dritten Partei empfangen wird; und
Kombinieren des entschlüsselten Schlüsselbeitrags und des selbsterzeugten Schlüsselbeitrags, um den Kommunikationsschlüssel zu erzeugen; und
Verschlüsseln oder Entschlüsseln von Daten (25), die an den zweiten Kommunikationspartner zu senden oder von demselben zu empfangen sind, basierend auf dem Kommunikationsschlüssel.

3. Verfahren gemäß Anspruch 2, das ferner folgende Schritte umfasst:
Empfangen (90) einer Anforderung nach der Identifikationsnummer des ersten Kommunikationspartners von der dritten Partei;
Empfangen einer Identifikation der dritten Partei;
Senden eines zweiten Authentifizierungsschlüssels, der gefunden wird durch syntaktisches Analysieren eines weiteren Binärschlüsselbaums, der einen weiteren Wurzelschlüssel (KR2) aufweist, der an dem ersten Kommunikationspartner gespeichert ist, unter Verwendung der Identifikation der dritten Partei, an die dritte Partei;
Empfangen eines Dritte-Partei-Schlüsselbeitrags, der unter Verwendung des zweiten Wurzelschlüssels verschlüsselt wird, der an dritten Partei abgeleitet wird durch Berechnen des weiteren Wurzelschlüssels (KR2) des weiteren Binärschlüsselbaums durch Verschlüsseln des weiteren Authentifizierungsschlüssels (KA2) unter Verwendung eines Knotenschlüssels (KN2), der in der dritten Partei gespeichert ist;
Entschlüsseln des Dritte-Partei-Schlüsselbeitrags unter Verwendung des weiteren Wurzelschlüssels (KR2), der an dem ersten Kommunikationspartner gespeichert ist.

4. Verfahren zum Betreiben eines zweiten Kommunikationspartners zum Durchführen einer Kommunikation mit einem ersten Kommunikationspartner unter Verwendung eines Kommunikationsschlüssels, das folgende Schritte umfasst:
Kommunizieren mit einer dritten Partei, wobei ein Verschlüsselungsschlüssel erstellt wird basierend auf einer Identifikation des zweiten Kommunikationspartners, wobei der Schritt des Erstellens folgende Schritte umfasst:
Senden einer Identifikation an die dritte Partei;
Empfangen eines Authentifizierungsschlüssels von der dritten Partei, wobei der Authentifizierungsschlüssel durch die dritte Partei erhalten wird durch syntaktisches Analysieren eines Binärschlüsselbaums, der einen Wurzelschlüssel (KR4) aufweist, der dem zweiten Kommunikationspartner (12, 19) zugeordnet ist, unter Verwendung der Identifikation des zweiten Kommunikationspartners;
Berechnen des Wurzelschlüssels (KR4) des Binärschlüsselbaums durch Verschlüsseln (304) des Authentifizierungsschlüssels (KA4) unter Verwendung eines Knotenschlüssels (KN4), der in dem zweiten Kommunikationspartner gespeichert ist;
Verschlüsseln eines selbsterzeugten Schlüsselbeitrags unter Verwendung des Wurzelschlüssels (KR4);
Senden des selbsterzeugten verschlüsselten Schlüsselbeitrags an die dritte Partei;
Entschlüsseln eines verschlüsselten Schlüsselbeitrags, der von der dritten Partei empfangen wird; und
Kombinieren des entschlüsselten Schlüsselbeitrags und des selbsterzeugten Schlüsselbeitrags, um den Kommunikationsschlüssel zu erzeugen;
Empfangen des Kommunikationsschlüssels, der basierend auf dem Verschlüsselungsschlüssel verschlüsselt wird, von der dritten Partei;
Entschlüsseln (42) des verschlüsselten Kommunikationsschlüssels, um den Verschlüsselungsschlüssel in Klartext zu erhalten; und
Verschlüsseln (25) oder Entschlüsseln (53) von Daten, die an den ersten Kommunikationspartner zu senden oder von demselben zu empfangen sind, basierend auf dem Kommunikationsschlüssel.

5. Verfahren zum Betreiben einer dritten Partei zum Erstellen eines Kommunikationsschlüssels zwischen einem ersten Kommunikationspartner und einem zweiten Kommunikationspartner, das folgende Schritte umfasst:
Kommunizieren mit dem ersten Kommunikationspartner, wobei ein Kommunikationsschlüssel zwischen dem ersten Kommunikationspartner und der dritten Partei basierend auf einer Identifikation des ersten Kommunikationspartners erstellt wird, mit folgenden Schritten:
Empfangen einer Identifikation des ersten Kommunikationspartners;
syntaktisches Analysieren eines Binärschlüsselbaums, der einen Wurzelschlüssel (KR1) aufweist, der dem ersten Kommunikationspartner (13, 18) zugeordnet ist, unter Verwendung der Identifikation des ersten Kommunikationspartners, um einen Authentifizierungsschlüssel (KA1) zu finden;
Senden des Authentifizierungsschlüssels an den ersten Kommunikationspartner;
Empfangen eines verschlüsselten Schlüsselbeitrags von dem ersten Kommunikationspartner, wobei der verschlüsselte Schlüsselbeitrag unter Verwendung des Wurzelschlüssels des Binärschlüsselbaums verschlüsselt wird;
Entschlüsseln des verschlüsselten Schlüsselbeitrags unter Verwendung des Wurzelschlüssels (KR1) von dem Binärschlüsselbaum, der dem ersten Kommunikationspartner zugeordnet ist; und
Verschlüsseln eines ersten selbsterzeugten Schlüsselbeitrags und Senden des verschlüsselten ersten selbsterzeugten Schlüsselbeitrags an den ersten Kommunikationspartner;
Kombinieren des entschlüsselten Schlüsselbeitrags und des ersten selbsterzeugten Schlüsselbeitrags, um den Kommunikationsschlüssel zu erzeugen;
Kommunizieren mit dem zweiten Kommunikationspartner, wobei ein Verschlüsselungsschlüssel basierend auf einer Identifikation des zweiten Kommunikationspartners erstellt wird, mit folgenden Schritten:
Empfangen einer Identifikation des zweiten Kommunikationspartners;
syntaktisches Analysieren eines weiteren Binärschlüsselbaums, der einen weiteren Wurzelschlüssel aufweist, der dem zweiten Kommunikationspartner (13, 18) zugeordnet ist, unter Verwendung der Identifikation des zweiten Kommunikationspartners, um einen weiteren Authentifizierungsschlüssel zu finden;
Senden des weiteren Authentifizierungsschlüssels an den zweiten Kommunikationspartner;
Empfangen eines verschlüsselten Schlüsselbeitrags von dem zweiten Kommunikationspartner, wobei der verschlüsselte Schlüsselbeitrag unter Verwendung des weiteren Wurzelschlüssels des weiteren Binärschlüsselbaums verschlüsselt wird;
Entschlüsseln des verschlüsselten Schlüsselbeitrags unter Verwendung des weiteren Wurzelschlüssels von dem weiteren Binärschlüsselbaum, der dem zweiten Kommunikationspartner zugeordnet ist; und
Verschlüsseln eines zweiten selbsterzeugten Schlüsselbeitrags und Senden des verschlüsselten zweiten selbsterzeugten Schlüsselbeitrags an den zweiten Kommunikationspartner;
Kombinieren des entschlüsselten Schlüsselbeitrags und des zweiten selbsterzeugten Schlüsselbeitrags, um den Verschlüsselungsschlüssel zu erzeugen,
wobei der Binärschlüsselbaum identisch ist mit dem weiteren Binärschlüsselbaum, und die erste Kommunikationspartneridentifikation sich von der zweiten Kommunikationspartneridentifikation unterscheidet, oder wobei sich der Binärschlüsselbaum von dem weiteren Binärschlüsselbaum unterscheidet,
Verschlüsseln (22) des Kommunikationsschlüssels unter Verwendung des Verschlüsselungsschlüssels; und
Senden (23) des verschlüsselten Kommunikationsschlüssels an den zweiten Kommunikationspartner.

6. Verfahren gemäß Anspruch 1 oder 5,
das ferner den Schritt des Beendens der Kommunikation mit dem ersten Kommunikationspartner durch die dritte Partei umfasst, falls die Identifikationsnummer des ersten Kommunikationspartners zu einem ungültigen Baumzustand führt oder falls die Identifikationsnummer des ersten Kommunikationspartners zu einem modifizierten Authentifizierungsschlüssel führt, falls der erste Kommunikationspartner für ungültig erklärt wird.

7. Verfahren gemäß Anspruch 1, 5 oder 6,
das ferner den Schritt des Beendens der Kommunikation mit dem zweiten Kommunikationspartner durch die dritte Partei umfasst, falls die Identifikationsnummer des zweiten Kommunikationspartners zu einem ungültigen Baumstatus führt oder falls die Identifikationsnummer des zweiten Kommunikationspartners zu einem modifizierten Authentifizierungsschlüssel führt, falls der zweite Kommunikationspartner deaktiviert ist.

8. Verfahren gemäß einem der Ansprüche 1, 5, 6 oder 7, bei dem die dritte Partei wirksam ist, um einen Dritte-Partei-Schlüsselbeitrag zu erzeugen und den erzeugten Schlüsselbeitrag unter Verwendung eines Verschlüsselungsschlüssels zu verschlüsseln, der durch Verwenden eines gespeicherten Knotenschlüssels und eines empfangenen Authentifizierungsschlüssels abgeleitet wird, wobei der erste Kommunikationspartner oder der zweite Kommunikationspartner wirksam ist, um einen jeweiligen Schlüsselbeitrag zu erzeugen und den erzeugten Schlüsselbeitrag zu verschlüsseln unter Verwendung eines Verschlüsselungsschlüssels, der basierend auf einem gespeicherten Knotenschlüssel und einem empfangenen Authentifizierungsschlüssel erzeugt wird.

9. Verfahren gemäß Anspruch 8, bei dem die Kombination des entschlüsselten Schlüsselbeitrags und des selbsterzeugten Schlüsselbeitrags unter Verwendung einer kryptographischen Hash-Funktion (315) durchgeführt wird.

10. Verfahren gemäß einem der vorhergehenden Ansprüche, bei dem die dritte Partei, der erste Kommunikationspartner oder der zweite Kommunikationspartner wirksam ist, um einen Binärschlüsselbaum zu speichern, um den Binärschlüsselbaum syntaktisch zu analysieren unter Verwendung einer Identifikation von einer Kommunikationsentität zum Herausfinden eines Authentifizierungsschlüssels an einem Blatt des Binärschlüsselbaums an einer bestimmten Bitposition, und um den Authentifizierungsschlüssel an die Kommunikationsentität zu senden.

11. Verfahren gemäß Anspruch 10, bei dem die Übertragung des Authentifizierungsschlüssels an die Kommunikationsentität ferner die Bitposition umfasst, die eine Baumebene anzeigt, an der ein gültiges Blatt erfasst wurde.

12. Verfahren gemäß Anspruch 10 oder 11, bei dem die Übertragung des Authentifizierungsschlüssels an die Kommunikationsentität ferner eine Zufallszahl umfasst, die für Verifizierungszwecke verwendet wird.

13. Verfahren gemäß einem der vorhergehenden Ansprüche, bei dem die dritte Partei, der erste Kommunikationspartner oder der zweite Kommunikationspartner einen Zufallszahlengenerator umfasst zum Erzeugen eines Schlüsselbeitrags als eine Zufallszahl mit einer spezifizierten Anzahl von Bits.

14. Verfahren gemäß einem der vorhergehenden Ansprüche, bei dem der erste und der zweite Kommunikationspartner in einem Computersystem vorgesehen sind, wobei das Computersystem über das Internet mit der dritten Partei verbunden ist, so dass die dritte Partei bezüglich des ersten und zweiten Kommunikationspartners entfernt positioniert ist.

15. Verfahren gemäß Anspruch 14, bei dem der erste Kommunikationspartner ein DVD-Abspielgerät, eine Vorrichtung zum Schreiben auf einem magnetischen Speichermedium oder eine andere Massenspeichervorrichtung ist, wobei der zweite Kommunikationspartner eine Anwendungssoftware zum Steuern der Vorrichtung ist.

16. Verfahren gemäß Anspruch 14 oder 15, bei dem der zweite Kommunikationspartner einen Proxyserver umfasst, der zum Lenken von Mitteilungen zwischen der dritten Partei und dem ersten Kommunikationspartner verwendet wird, wobei der erste Kommunikationspartner nicht direkt mit einer Eingabe-/Ausgabeschnittstelle (11) des Computersystems (10) verbunden ist.

17. Verfahren gemäß einem der Ansprüche 1 oder 5, das ferner folgende Schritte umfasst:
Empfangen einer Nachricht, dass ein erster Kommunikationspartner und/oder zweiter Kommunikationspartner in einem unerlaubten Zustand ist; und
Modifizieren der dritten Partei, so dass der Schritt des Erstellens eines Kommunikationsschlüssels oder eines Verschlüsselungsschlüssels zwischen der dritten Partei und dem ersten oder zweiten Kommunikationspartner basierend auf einer Identifikation des ersten oder zweiten Kommunikationspartners nicht zu einem Kommunikationsschlüssel oder Verschlüsselungsschlüssel führt, der an der dritten Partei und an dem ersten oder zweiten Kommunikationspartner identisch ist.

18. Verfahren gemäß Anspruch 17, bei dem der Schritt des Modifizierens der dritten Partei einen Schritt des Modifizierens des Binärschlüsselbaums umfasst, wobei der Schritt des Modifizierens des Binärschlüsselbaums durchgeführt wird durch Schneiden eines Blattknotens, Modifizieren eines Schlüssels, der dem Blattknoten zugeordnet ist, oder Ersetzen eines Blattes durch einen zusätzlichen Zweig oder eine Mehrzahl von Zweigen.

19. Verfahren gemäß einem der vorhergehenden Ansprüche, bei dem die Identifikationsnummer, die den ersten Kommunikationspartner, den zweiten Kommunikationspartner oder die dritte Partei identifiziert, hierarchisch gebildet ist, so dass unterschiedliche Bits mit unterschiedlichen Wertigkeiten unterschiedlichen Nummern von Vorrichtungen zugeordnet sind.

20. Verfahren gemäß Anspruch 19, bei dem eine Gruppe aller Vorrichtungen von einem Hersteller oder eine Gruppe aller Vorrichtungen mit der gleichen Softwareversion oder eine Gruppe aller Vorrichtungen mit der gleichen Hardwareversion zumindest ein Bit ihrer Identifikationsnummern aufweist, das für eine Gruppe von Vorrichtungen identisch ist.

21. Vorrichtung zum Erstellen eines Kommunikationsschlüssels für eine Kommunikation zwischen einem ersten Kommunikationspartner und einem zweiten Kommunikationspartner, wobei der Kommunikationsschlüssel zwischen dem ersten Kommunikationspartner (13) und einer dritten Partei (15) erstellt wird basierend auf einer Identifikation des ersten Kommunikationspartners, wobei eine Kommunikation zwischen dem ersten Kommunikationspartner und der dritten Partei nicht den Kommunikationsschlüssel in Klartext umfasst, wobei ein Verschlüsselungsschlüssel basierend auf einer Identifikation des zweiten Kommunikationspartners (12) erstellt wird, wobei der Verschlüsselungsschlüssel dem zweiten Kommunikationspartner und der dritten Partei bekannt ist, wobei der erste Kommunikationspartner (13) den Verschlüsselungsschlüssel nicht kennt,
wobei die dritte Partei (15, 17), der erste Kommunikationspartner (13, 18) oder der zweite Kommunikationspartner (12, 19) wirksam ist zum Erstellen (20) des Kommunikationsschlüssels oder zum Erstellen (21) eines Verschlüsselungsschlüssels,
um einen Binärschlüsselbaum syntaktisch zu analysieren, der einen Wurzelschlüssel (KR1) aufweist, der einer jeweiligen Entität aus der dritten Partei (15, 17), dem ersten Kommunikationspartner (13, 18) und dem zweiten Kommunikationspartner (12, 19) zugeordnet ist, unter Verwendung der Identifikation der jeweiligen Entität, um einen Authentifizierungsschlüssel (KA1) zu erhalten;
um den Authentifizierungsschlüssel an die jeweilige Entität zu senden;
um einen verschlüsselten Schlüsselbeitrag von der jeweiligen Entität zu empfangen, wobei der Schlüsselbeitrag durch die jeweilige Entität verschlüsselt wurde unter Verwendung des Wurzelschlüssels des Binärschlüsselbaums, und wobei der Wurzelschlüssel des Binärschlüsselbaums in der jeweiligen Entität berechnet wurde durch Verschlüsseln des Authentifizierungsschlüssels unter Verwendung eines Knotenschlüssels, der in der jeweiligen Entität gespeichert ist,
um den verschlüsselten Schlüsselbeitrag zu entschlüsseln unter Verwendung des Wurzelschlüssels (KR1) von dem Binärschlüsselbaum, der der jeweiligen Entität zugeordnet ist, und
um den entschlüsselten Schlüsselbeitrag und einen selbsterzeugten Schlüsselbeitrag zu kombinieren, um den Kommunikationsschlüssel oder den Verschlüsselungsschlüssel zu erzeugen,
wobei die Vorrichtung ferner folgende Merkmale umfasst:
eine Verschlüsselungseinrichtung zum Verschlüsseln (22) des Kommunikationsschlüssels basierend auf dem Verschlüsselungsschlüssel durch die dritte Partei (15);
einen Sender zum Senden (23) des verschlüsselten Kommunikationsschlüssels von der dritten Partei (15) an den zweiten Kommunikationspartner (12); und
eine Entschlüsselungseinrichtung zum Entschlüsseln des entschlüsselten Kommunikationsschlüssels durch den zweiten Kommunikationspartner (12).

22. Vorrichtung zum Betreiben eines ersten Kommunikationspartners (13) zum Durchführen einer Kommunikation mit einem zweiten Kommunikationspartner (12), die folgende Merkmale umfasst:
einen Prozessor zum Kommunizieren (20) mit der dritten Partei (15) ansprechend auf eine Anforderung nach Kommunikation zwischen dem ersten Kommunikationspartner und dem zweiten Kommunikationspartner, durch
Senden einer Identifikation an die dritte Partei;
Empfangen eines Authentifizierungsschlüssels von der dritten Partei, wobei der Authentifizierungsschlüssel durch die dritte Partei erhalten wird durch syntaktisches Analysieren eines Binärschlüsselbaums, der einen Wurzelschlüssel (KR1) aufweist, der dem ersten Kommunikationspartner (13, 18) zugeordnet ist, unter Verwendung der Identifikation des ersten Kommunikationspartners;
Berechnen des Wurzelschlüssels (KR1) des Binärschlüsselbaums durch Verschlüsseln (304) des Authentifizierungsschlüssels (KA1) unter Verwendung eines Knotenschlüssels (KN1), der in dem ersten Kommunikationspartner gespeichert ist;
Verschlüsseln (305) eines selbsterzeugten Schlüsselbeitrags unter Verwendung des Wurzelschlüssels (KR1);
Senden des selbsterzeugten verschlüsselten Schlüsselbeitrags an die dritte Partei;
Entschlüsseln eines verschlüsselten Schlüsselbeitrags, der von der dritten Partei empfangen wird; und
Kombinieren des entschlüsselten Schlüsselbeitrags und des selbsterzeugten Schlüsselbeitrags, um den Kommunikationsschlüssel zu erzeugen; und
eine Ver-/Entschlüsselungseinrichtung zum Verschlüsseln oder Entschlüsseln von Daten (25), die an den zweiten Kommunikationspartner zu senden oder von demselben zu empfangen sind, basierend auf dem Kommunikationsschlüssel.

23. Vorrichtung zum Betreiben eines zweiten Kommunikationspartners zum Durchführen einer Kommunikation mit einem ersten Kommunikationspartner unter Verwendung eines Kommunikationsschlüssels, die folgende Merkmale umfasst:
einen Prozessor zum Kommunizieren mit einer dritten Partei durch:
Senden einer Identifikation an die dritte Partei;
Empfangen eines Authentifizierungsschlüssels von der dritten Partei, wobei der Authentifizierungsschlüssel durch die dritte Partei erhalten wird durch syntaktisches Analysieren eines Binärschlüsselbaums mit einem Wurzelschlüssel (KR4), der dem zweiten Kommunikationspartner (12, 19) zugeordnet ist, unter Verwendung der Identifikation des zweiten Kommunikationspartners;
Berechnen des Wurzelschlüssels (KR4) des Binärschlüsselbaums durch Verschlüsseln (304) des Authentifizierungsschlüssels (KA4) unter Verwendung eines Knotenschlüssels (KN4), der in dem zweiten Kommunikationspartner gespeichert ist;
Verschlüsseln eines selbsterzeugten Schlüsselbeitrags unter Verwendung des Wurzelschlüssels (KR4);
Senden des selbsterzeugten verschlüsselten Schlüsselbeitrags an die dritte Partei;
Entschlüsseln eines verschlüsselten Schlüsselbeitrags, der von der dritten Partei empfangen wird; und
Kombinieren des entschlüsselten Schlüsselbeitrags und des selbsterzeugten Schlüsselbeitrags, um den Verschlüsselungsschlüssel zu erzeugen;
einen Empfänger zum Empfangen des Kommunikationsschlüssels, der basierend auf dem Verschlüsselungsschlüssel verschlüsselt wird, von der dritten Partei;
eine Entschlüsselungseinrichtung zum Entschlüsseln (42) des verschlüsselten Kommunikationsschlüssels, um den Kommunikationsschlüssel in Klartext zu erhalten; und
eine Ver-/Entschlüsselungseinrichtung zum Verschlüsseln (25) oder Entschlüsseln (53) von Daten, die an den ersten Kommunikationspartner zu senden oder von demselben zu empfangen sind, basierend auf dem Kommunikationsschlüssel.

24. Vorrichtung zum Betreiben einer dritten Partei zum Erstellen eines Kommunikationsschlüssels zwischen einem ersten Kommunikationspartner und einem zweiten Kommunikationspartner, die folgende Merkmale umfasst:
einen Prozessor zum Kommunizieren mit dem ersten Kommunikationspartner, wobei ein Kommunikationsschlüssel zwischen dem ersten Kommunikationspartner und der dritten Partei basierend auf einer Identifikation des ersten Kommunikationspartners erstellt wird, durch:
Empfangen einer Identifikation des ersten Kommunikationspartners;
syntaktisches Analysieren eines Binärschlüsselbaums, der einen Wurzelschlüssel (KR1) aufweist, der dem ersten Kommunikationspartner (13, 18) zugeordnet ist, unter Verwendung der Identifikation des ersten Kommunikationspartners, um einen Authentifizierungsschlüssel (KA1) zu finden;
Senden des Authentifizierungsschlüssels an den ersten Kommunikationspartner;
Empfangen eines verschlüsselten Schlüsselbeitrags von dem ersten Kommunikationspartner, wobei der verschlüsselte Schlüsselbeitrag unter Verwendung des Wurzelschlüssels des Binärschlüsselbaums verschlüsselt wird;
Entschlüsseln des verschlüsselten Schlüsselbeitrags unter Verwendung des Wurzelschlüssels (KR1) von dem Binärschlüsselbaum, der dem ersten Kommunikationspartner zugeordnet ist; und
Verschlüsseln eines ersten selbsterzeugten Schlüsselbeitrags und Senden des verschlüsselten ersten selbsterzeugten Schlüsselbeitrags an den ersten Kommunikationspartner;
Kombinieren des entschlüsselten Schlüsselbeitrags und des ersten selbsterzeugten Schlüsselbeitrags, um den Kommunikationsschlüssel zu erzeugen; und
Kommunizieren mit dem zweiten Kommunikationspartner, wobei ein Verschlüsselungsschlüssel basierend auf einer Identifikation des zweiten Kommunikationspartners erstellt wird, durch:
Empfangen einer Identifikation des zweiten Kommunikationspartners;
syntaktisches Analysieren eines weiteren Binärschlüsselbaums, der einen weiteren Wurzelschlüssel aufweist, der dem zweiten Kommunikationspartner (13, 18) zugeordnet ist, unter Verwendung der Identifikation des zweiten Kommunikationspartners, um einen weiteren Authentifizierungsschlüssel zu finden;
Senden des weiteren Authentifizierungsschlüssels an den zweiten Kommunikationspartner;
Empfangen eines verschlüsselten Schlüsselbeitrags von dem zweiten Kommunikationspartner, wobei der verschlüsselte Schlüsselbeitrag unter Verwendung des weiteren Wurzelschlüssels des weiteren Binärschlüsselbaums verschlüsselt wird;
Entschlüsseln des verschlüsselten Schlüsselbeitrags unter Verwendung des weiteren Wurzelschlüssels von dem weiteren Binärschlüsselbaum, der dem zweiten Kommunikationspartner zugeordnet ist; und
Verschlüsseln eines zweiten selbsterzeugten Schlüsselbeitrags und Senden des verschlüsselten zweiten selbsterzeugten Schlüsselbeitrags an den zweiten Kommunikationspartner;
Kombinieren des entschlüsselten Schlüsselbeitrags und des zweiten selbsterzeugten Schlüsselbeitrags, um den Verschlüsselungsschlüssel zu erzeugen, wobei der Binärschlüsselbaum identisch ist mit dem weiteren Binärschlüsselbaum, und die erste Kommunikationspartneridentifikation sich von der zweiten Kommunikationspartneridentifikation unterscheidet, oder wobei sich der Binärschlüsselbaum von dem weiteren Binärschlüsselbaum unterscheidet;
eine Verschlüsselungseinrichtung zum Verschlüsseln (22) des Kommunikationsschlüssels unter Verwendung des Verschlüsselungsschlüssels; und
einen Sender zum Senden (23) des verschlüsselten Kommunikationsschlüssels an den zweiten Kommunikationspartner.

25. Computerprogramm mit einer Programmcodeeinrichtung zum Durchführen der Schritte des Verfahrens gemäß einem der Ansprüche 1 bis 20, wenn dasselbe auf einem Computer läuft.

## Revendications

1. Procédé pour établir une clé de communication pour une communication entre un premier partenaire de communication et un deuxième partenaire de communication, comprenant:
établir (20) la clé de communication entre le premier partenaire de communication (13) et une tierce partie (15) sur base d'une identification du premier partenaire de communication, où une communication entre le premier partenaire de communication et la tierce partie n'inclut pas la clé de communication en texte clair;
établir (21) une clé de cryptage sur base d'une identification du deuxième partenaire de communication (12), où la clé de cryptage est connue du deuxième partenaire de communication et de la tierce partie, le premier partenaire de communication (13) ne connaissant pas la clé de cryptage;
crypter (22) la clé de communication sur base de la clé de cryptage par la tierce partie (15);
transmettre (23) la clé de communication crypteé de la tierce partie (15) au deuxième partenaire de communication (12); et
décrypter la clé de communication cryptée par le deuxième partenaire de communication (12),
dans lequel la tierce partie (15, 17), le premier partenaire de communication (13, 18) ou le deuxième partenaire de communication (12, 19) est opérationnel, à l'étape d'établissement (20) de la clé de communication ou à l'étape d'établissement (21) d'une clé de cryptage, pour réaliser les étapes suivantes,
analyser un arbre de clés binaire présentant une clé de racine (KR1) associée à une entité respective parmi la tierce partie (15, 17), le premier partenaire de communication (13, 18) et le deuxième partenaire de communication (12, 19) à l'aide de l'identification de l'entité respective, pour obtenir une clé d'authentification (KA1);
transmettre la clé d'authentification à l'entité respective;
recevoir une contribution de clé cryptée de l'entité respective, où la contribution de clé a été cryptée par l'entité respective à l'aide de la clé de racine de l'arbre de clés binaire, et où la clé de racine de l'arbre de clés binaire a été calculée dans l'entité respective en cryptant la clé d'authentification à l'aide d'une clé de noeud mémorisée dans l'entité respective,
décrypter la contribution de clé cryptée à l'aide de la clé de racine (KR1) de l'arbre de clés binaire associée à l'entité respective, et
combiner la contribution de clé décryptée et la contribution de clé auto-générée, pour générer la clé de communication ou la clé de cryptage.

2. Procédé pour faire fonctionner un premier partenaire de communication (13) pour réaliser une communication avec un deuxième partenaire de communication (12), comprenant:
en réponse à une demande de communication entre le premier partenaire de communication et le deuxième partenaire de communication, communiquer (20) avec la tierce partie (15)
en transmettant une identification à la tierce partie;
en recevant une clé d'authentification de la tierce partie, la clé d'authentification étant obtenue par la tierce partie en analysant un arbre de clés binaire présentant une clé de racine (KR1) associée au premier partenaire de communication (13, 18) à l'aide de l'identification du premier partenaire de communication;
en calculant la clé de racine (KR1) de l'arbre de clés binaire en cryptant (304) la clé d'authentification (KA1) à l'aide d'une clé de noeud (KN1) mémorisée dans le premier partenaire de communication;
en cryptant (305) une contribution de clé auto-générée à l'aide de la clé de racine (KR1);
en transmettant la contribution de clé auto-générée cryptée à la tierce partie;
en décryptant une contribution de clé cryptée reçue de la tierce partie; et
en combinant la contribution de clé décryptée et la contribution de clé auto-générée, pour générer la clé de communication; et
crypter ou décrypter les données (25) à transmettre au ou reçues du deuxième partenaire de communication sur base de la clé de communication.

3. Procédé selon la revendication 2, comprenant par ailleurs les étapes suivantes consistant à:
recevoir (90) une demande du numéro d'identification du premier partenaire de communication de la tierce partie;
recevoir une identification de la tierce partie;
envoyer à la tierce partie une deuxième clé d'authentification trouvée en analysant un autre arbre de clés binaire présentant une autre clé de racine (KR2) mémorisée au premier partenaire de communication à l'aide de l'identification de la tierce partie;
recevoir une contribution de clé de tierce partie cryptée à l'aide d'une deuxième clé de racine dérivée à la tierce partie en calculant l'autre clé de racine (KR2) de l'autre arbre de clés binaire en cryptant l'autre clé d'authentification (KA2) à l'aide d'une clé de noeud (KN2) mémorisée dans la tierce partie;
décrypter la contribution de clé de tierce partie à l'aide de l'autre clé de racine (KR2) mémorisée au premier partenaire de communication.

4. Procédé pour faire fonctionner un deuxième partenaire de communication pour réaliser une communication avec un premier partenaire de communication à l'aide d'une clé de communication, comprenant:
communiquer avec une tierce partie, où une clé de cryptage est établie sur base d'une identification du deuxième partenaire de communication, où l'étape d'établissement comporte:
transmettre une identification à la tierce partie;
recevoir une clé d'authentification de la tierce partie, la clé d'authentification étant obtenue par la tierce partie en analysant un arbre de clés binaire présentant une clé de racine (KR4) associée au deuxième partenaire de communication (12, 19) à l'aide de l'identification du deuxième partenaire de communication;
calculer la clé de racine (KR4) de l'arbre de clés binaire en cryptant (304) la clé d'authentification (KA4) à l'aide d'une clé de noeud (KN4) mémorisée dans le deuxième partenaire de communication;
crypter une contribution de clé auto-générée à l'aide de la clé de racine (KR4);
transmettre à la tierce partie la contribution de clé cryptée auto-générée;
décrypter une contribution de clé cryptée reçue de la tierce partie; et
combiner la contribution de clé décryptée et la contribution de clé auto-générée, pour générer la clé de communication;
recevoir la clé de communication cryptée sur base de la clé de cryptage, de la tierce partie;
décrypter (42) la clé de communication cryptée, pour obtenir la clé de cryptage en texte clair; et
crypter (25) ou décrypter (53) les données transmises au ou reçues du premier partenaire de communication sur base de la clé de communication.

5. Procédé pour faire fonctionner une tierce partie pour établir une clé de communication entre un premier partenaire de communication et un deuxième partenaire de communication, comprenant:
communiquer avec le premier partenaire de communication, où une clé de communication entre le premier partenaire de communication et la tierce partie est établie sur base d'une identification du premier partenaire de communication, comprenant:
recevoir une identification du premier partenaire de communication;
analyser un arbre de clés binaire présentant une clé de racine (KR1) associée au premier partenaire de communication (13, 18) à l'aide de l'identification du premier partenaire de communication, pour trouver une clé d'authentification (KA1);
transmettre la clé d'authentification au premier partenaire de communication;
recevoir une contribution de clé cryptée du premier partenaire de communication, la contribution de clé cryptée étant cryptée à l'aide de la clé de racine de l'arbre de clés binaire,
décrypter la contribution de clé cryptée à l'aide de la clé de racine (KR1) de l'arbre de clés binaire associée au premier partenaire de communication, et
crypter une première contribution de clé auto-générée et envoyer la première contribution de clé auto-générée au premier partenaire de communication;
combiner la contribution de clé décryptée et la première contribution de clé auto-générée, pour générer la clé de communication;
communiquer avec le deuxième partenaire de communication, où une clé de cryptage est établie sur base d'une identification du deuxième partenaire de communication, comprenant:
recevoir une identification du deuxième partenaire de communication;
analyser un autre arbre de clés binaire présentant une autre clé de racine associée au deuxième partenaire de communication (13, 18) à l'aide de l'identification du deuxième partenaire de communication, pour trouver une autre clé d'authentification;
transmettre l'autre clé d'authentification au deuxième partenaire de communication;
recevoir une contribution de clé cryptée du deuxième partenaire de communication, la contribution de clé cryptée étant cryptée à l'aide de l'autre clé de racine de l'autre arbre de clés binaire,
décrypter la contribution de clé cryptée à l'aide de l'autre clé de racine de l'autre arbre de clés binaire associée au deuxième partenaire de communication, et
crypter une deuxième contribution de clé auto-générée et envoyer la deuxième contribution de clé auto-générée cryptée au deuxième partenaire de communication;
combiner la contribution de clé décryptée et la deuxième contribution de clé auto-générée, pour générer la clé de cryptage,
dans lequel l'arbre de clés binaire est identique à l'autre arbre de clés binaire et l'identification du premier partenaire de communication est différente de l'identification du deuxième partenaire de communication ou dans lequel l'arbre de clés binaire est différent de l'autre arbre de clés binaire,
crypter (22) la clé de communication à l'aide de la clé de cryptage; et
transmettre (23) la clé de communication cryptée au deuxième partenaire de communication.

6. Procédé selon la revendication 1 ou 5,
comprenant par ailleurs l'étape consistant à terminer, par la tierce partie, la communication avec le premier partenaire de communication si le numéro d'identification du premier partenaire de communication résulte en un état d'arbre non valide, ou si le numéro d'identification du premier partenaire de communication résulte en une clé d'authentification modifiée, si le premier partenaire de communication est révoqué.

7. Procédé selon la revendication 1, 5 ou 6,
comprenant par ailleurs l'étape consistant à terminer, par la tierce partie, la communication avec le deuxième partenaire de communication si le numéro d'identification du deuxième partenaire de communication résulte en un état d'arbre non valide, ou si le numéro d'identification du deuxième partenaire de communication résulte en une clé d'authentification modifiée, si le deuxième partenaire de communication est désactivé.

8. Procédé selon l'une quelconque des revendications 1, 5, 6 ou 7, dans lequel la tierce partie est opérationnelle pour générer une contribution de clé de tierce partie et pour crypter la contribution de clé générée à l'aide d'une clé de cryptage dérivée à l'aide d'une clé de noeud mémorisée et d'une clé d'authentification reçue, dans lequel le premier partenaire de communication ou le deuxième partenaire de communication est opérationnel pour générer une contribution de clé respective et pour crypter la contribution de clé générée à l'aide d'une clé de cryptage générée sur base d'une clé de noeud mémorisée et d'une clé d'authentification reçue.

9. Procédé selon la revendication 8, dans lequel la combinaison de la contribution de clé décryptée et de la contribution de clé auto-générée est effectuée à l'aide d'une fonction de hachage cryptographique (315).

10. Procédé selon l'une quelconque des revendications précédentes, dans lequel la tierce partie, le premier partenaire de communication ou le deuxième partenaire de communication est opérationnel pour mémoriser un arbre de clés binaire, pour analyser l'arbre de clés binaire à l'aide d'une identification d'une entité de communication, pour découvrir une clé d'authentification à une feuille de l'arbre de clés binaire à une certaine position de bit et pour transmettre la clé d'authentification à l'entité de communication.

11. Procédé selon la revendication 10, dans lequel la transmission de la clé d'authentification à l'entité de communication comporte par ailleurs la position de bit indiquant un niveau d'arbre auquel a été détectée une feuille valide.

12. Procédé selon la revendication 10 ou 11, dans lequel la transmission de la clé d'authentification à l'entité de communication comporte par ailleurs un nombre aléatoire utilisé à des fins de vérification.

13. Procédé selon l'une quelconque des revendications précédentes, dans lequel la tierce partie, le premier partenaire de communication ou le deuxième partenaire de communication comporte un générateur de nombre aléatoire destiné à générer une contribution de clé comme nombre aléatoire ayant un nombre de bits spécifié.

14. Procédé selon l'une quelconque des revendications précédentes, dans lequel les premier et deuxième partenaires de communication sont prévus dans un système informatique, le système informatique étant connecté à la tierce partie via Internet, de sorte que la tierce partie soit positionnée à distance par rapport aux premier et deuxième partenaires de communication.

15. Procédé selon la revendication 14, dans lequel le premier partenaire de communication est un enregistreur de DVD, un dispositif d'écriture sur un support de mémoire magnétique ou un autre dispositif de mémoire de masse, dans lequel le deuxième partenaire de communication est un logiciel d'application pour commander le dispositif.

16. Procédé selon la revendication 14 ou 15, dans lequel le deuxième partenaire de communication comporte un serveur proxy utilisé pour acheminer les messages entre la tierce partie et le premier partenaire de communication, dans lequel le premier partenaire de communication n'est pas connecté directement à une interface d'entrée/sortie (11) du système informatique (10).

17. Procédé selon l'une quelconque des revendications 1 ou 5, comprenant par ailleurs l'étape suivante consistant à:
recevoir connaissance d'un premier partenaire de communication et/ou d'un deuxième partenaire de communication se trouvant dans un état illicite; et
modifier la tierce partie de sorte que l'étape d'établissement d'une clé de communication ou d'une clé de cryptage entre la tierce partie et le premier ou deuxième partenaire de communication sur base d'une identification du premier ou deuxième partenaire de communication ne résulte pas en une clé de communication ou clé de cryptage qui est identique à la tierce partie et au premier ou deuxième partenaire de communication.

18. Procédé selon la revendication 17, dans lequel l'étape de modification de la tierce partie comporte une étape consistant à modifier l'arbre de clés binaire, dans lequel l'étape de modification de l'arbre de clés binaire est réalisée en coupant un noeud de feuille, en modifiant une clé associée au noeud de feuille ou en remplaçant une feuille par une branche additionnelle ou une pluralité de branches.

19. Procédé selon l'une quelconque des revendications précédentes, dans lequel le numéro d'identification identifiant le premier partenaire de communication, le deuxième partenaire de communication ou la tierce partie est formé de manière hiérarchique, de sorte que différents bits ayant différentes significations soient associés à différents numéros de dispositifs.

20. Procédé selon la revendication 19, dans lequel un groupe de tous les dispositifs d'un fabricant ou d'un groupe de tous les dispositifs ayant la même version de logiciel ou d'un groupe de tous les dispositifs ayant la même version de matériel ont au moins un bit de leurs numéros d'identification qui est identique pour un groupe de dispositifs.

21. Appareil pour établir une clé de communication pour une communication entre un premier partenaire de communication et un deuxième partenaire de communication, dans lequel la clé de communication entre le premier partenaire de communication (13) et une tierce partie (15) est établie sur base d'une identification du premier partenaire de communication, où une communication entre le premier partenaire de communication et la tierce partie n'inclut pas la clé de communication en texte clair, dans lequel une clé de cryptage est établie sur base d'une identification du deuxième partenaire de communication (12), dans lequel la clé de cryptage est connue du deuxième partenaire de communication et de la tierce partie, le premier partenaire de communication (13) ne connaissant pas la clé de cryptage;
dans lequel la tierce partie (15, 17), le premier partenaire de communication (13, 18) ou le deuxième partenaire de communication (12, 19) est opérationnel pour établir (20) la clé de communication ou pour établir (21) une clé de cryptage,
pour analyser un arbre de clés binaire présentant une clé de racine (KR1) associée à une entité respective parmi la tierce partie (15, 17), le premier partenaire de communication (13, 18) et le deuxième partenaire de communication (12, 19) à l'aide de l'identification de l'entité respective, pour obtenir une clé d'authentification (KA1);
pour transmettre la clé d'authentification à l'entité respective;
pour recevoir une contribution de clé cryptée de l'entité respective, où la contribution de clé a été cryptée par l'entité respective à l'aide de la clé de racine de l'arbre de clés binaire, et où la clé de racine de l'arbre de clés binaire a été calculée dans l'entité respective en cryptant la clé d'authentification à l'aide d'une clé de noeud mémorisée dans l'entité respective,
pour décrypter la contribution de clé cryptée à l'aide de la clé de racine (KR1) de l'arbre de clés binaire associée à l'entité respective, et
pour combiner la contribution de clé décryptée et une contribution de clé auto-générée, pour générer la clé de communication ou la clé de cryptage,
dans lequel l'appareil comprend par ailleurs:
un crypteur destiné à crypter (22) la clé de communication sur base de la clé de cryptage par la tierce partie (15);
un émetteur destiné à transmettre (23) la clé de communication cryptée de la tierce partie (15) au deuxième partenaire de communication (12); et
un décrypteur destiné à décrypter la clé de communication cryptée par le deuxième partenaire de communication (12).

22. Appareil pour faire fonctionner un premier partenaire de communication (13) pour réaliser une communication avec un deuxième partenaire de communication (12), comprenant:
un processeur destiné à communiquer (20) avec la tierce partie (15) en réponse à une demande de communication entre le premier partenaire de communication et le deuxième partenaire de communication,
en transmettant une identification à la tierce partie;
en recevant une clé d'authentification de la tierce partie, la clé d'authentification étant obtenue par la tierce partie en analysant un arbre de clés binaire présentant une clé de racine (KR1) associée au premier partenaire de communication (13, 18) à l'aide de l'identification du premier partenaire de communication;
en calculant la clé de racine (KR1) de l'arbre de clés binaire en cryptant (304) la clé d'authentification (KA1) à l'aide d'une clé de noeud (KN1) mémorisée dans le premier partenaire de communication;
en cryptant (305) une contribution de clé auto-générée à l'aide de la clé de racine (KR1);
en transmettant la contribution de clé auto-générée cryptée à la tierce partie;
en décryptant une contribution de clé cryptée reçue de la tierce partie; et
en combinant la contribution de clé décryptée et la contribution de clé auto-générée, pour générer la clé de communication; et
un crypteur/décrypteur destiné à crypter ou décrypter les données (25) à transmettre au ou reçues du deuxième partenaire de communication sur base de la clé de communication.

23. Appareil pour faire fonctionner un deuxième partenaire de communication pour réaliser une communication avec un premier partenaire de communication à l'aide d'une clé de communication, comprenant:
un processeur destiné à communiquer avec une tierce partie:
en transmettant une identification à la tierce partie;
en recevant une clé d'authentification de la tierce partie, la clé d'authentification étant obtenue par la tierce partie en analysant un arbre de clés binaire présentant une clé de racine (KR4) associée au deuxième partenaire de communication (12, 19) à l'aide de l'identification du deuxième partenaire de communication;
en calculant la clé de racine (KR4) de l'arbre de clés binaire en cryptant (304) la clé d'authentification (KA4) à l'aide d'une clé de noeud (KN4) mémorisée dans le deuxième partenaire de communication;
en cryptant une contribution de clé auto-générée à l'aide de la clé de racine (KR4);
en transmettant à la tierce partie la contribution de clé cryptée auto-générée;
en décryptant une contribution de clé cryptée reçue de la tierce partie; et
en combinant la contribution de clé décryptée et la contribution de clé auto-générée, pour générer la clé de communication;
un récepteur destiné à recevoir la clé de communication cryptée sur base de la clé de cryptage, de la tierce partie;
un décrypteur destiné à décrypter (42) la clé de communication cryptée, pour obtenir la clé de cryptage en texte clair; et
un crypteur/décrypteur destiné à crypter (25) ou décrypter (53) les données transmites au ou reçues du premier partenaire de communication sur base de la clé de communication.

24. Appareil pour faire fonctionner une tierce partie pour établir une clé de communication entre un premier partenaire de communication et un deuxième partenaire de communication, comprenant:
un processeur destiné à communiquer avec le premier partenaire de communication, où une clé de communication entre le premier partenaire de communication et la tierce partie est établie sur base d'une identification du premier partenaire de communication:
en recevant une identification du premier partenaire de communication;
en analysant un arbre de clés binaire présentant une clé de racine (KR1) associée au premier partenaire de communication (13, 18) à l'aide de l'identification du premier partenaire de communication, pour trouver une clé d'authentification (KA1);
en transmettant la clé d'authentification au premier partenaire de communication;
en recevant une contribution de clé cryptée du premier partenaire de communication, la contribution de clé cryptée étant cryptée à l'aide de la clé de racine de l'arbre de clés binaire,
en décryptant la contribution de clé cryptée à l'aide de la clé de racine (KR1) de l'arbre de clés binaire associée au premier partenaire de communication, et
en cryptant une première contribution de clé auto-générée et en envoyant la première contribution de clé auto-générée au premier partenaire de communication;
en combinant la contribution de clé décryptée et la première contribution de clé auto-générée, pour générer la clé de communication; et
en communiquant avec le deuxième partenaire de communication, où une clé de cryptage est établie sur base d'une identification du deuxième partenaire de communication
en recevant une identification du deuxième partenaire de communication;
en analysant un autre arbre de clés binaire présentant une autre clé de racine associée au deuxième partenaire de communication (13, 18) à l'aide de l'identification du deuxième partenaire de communication, pour trouver une autre clé d'authentification;
en transmettant l'autre clé d'authentification au deuxième partenaire de communication;
en recevant une contribution de clé cryptée du deuxième partenaire de communication, la contribution de clé cryptée étant cryptée à l'aide de l'autre clé de racine de l'autre arbre de clés binaire,
en décryptant la contribution de clé cryptée à l'aide de l'autre clé de racine de l'autre arbre de clés binaire associée au deuxième partenaire de communication, et
en cryptant une deuxième contribution de clé auto-générée et envoyant la deuxième contribution de clé auto-générée cryptée au deuxième partenaire de communication;
en combinant la contribution de clé décryptée et la deuxième contribution de clé auto-générée, pour générer la clé de cryptage,
dans lequel l'arbre de clés binaire est identique à l'autre arbre de clés binaire et l'identification du premier partenaire de communication est différente de l'identification du deuxième partenaire de communication ou dans lequel l'arbre de clés binaire est différent de l'autre arbre de clés binaire;
un crypteur destiné à crypter (22) la clé de communication à l'aide de la clé de cryptage; et
un émetteur destiné à transmettre (23) la clé de communication cryptée au deuxième partenaire de communication.

25. Programme d'ordinateur ayant un moyen de code de programme pour réaliser les étapes du procédé selon l'une quelconque des revendications 1 à 20 lorsqu'il est exécuté sur un ordinateur.
